(19) Europäisches Patentamt / European Patent Office / Office européen des brevets

(11) **EP 3 259 484 B1**

(12) **EUROPÄISCHE PATENTSCHRIFT**

(45) Veröffentlichungstag und Bekanntmachung des Hinweises auf die Patenterteilung:
**05.12.2018 Patentblatt 2018/49**

(21) Anmeldenummer: **16709685.8**

(22) Anmeldetag: **19.02.2016**

(51) Int Cl.:
***F16C 33/12*** *(2006.01)*

(86) Internationale Anmeldenummer:
**PCT/AT2016/050033**

(87) Internationale Veröffentlichungsnummer:
**WO 2016/131074 (25.08.2016 Gazette 2016/34)**

(54) **GLEITLAGERELEMENT**

SLIDING BEARING ELEMENT

ÉLÉMENT DE PALIER LISSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2015 AT 501282015**

(43) Veröffentlichungstag der Anmeldung:
**27.12.2017 Patentblatt 2017/52**

(73) Patentinhaber: **Miba Gleitlager Austria GmbH**
**4663 Laakirchen (AT)**

(72) Erfinder: **ZIDAR, Jakob**
**4813 Altmünster (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
**DE-A1- 10 054 461      GB-A- 2 375 801**
**US-A1- 2004 265 618      US-A1- 2012 064 365**

EP 3 259 484 B1

**Beschreibung**

Die Erfindung betrifft ein Gleitlagerelement, insbesondere Radialgleitlagerelement, umfassend in dieser Reihenfolge übereinander ein Stützelement, das insbesondere eine Stützschicht bildet, zumindest eine Laufschicht, zumindest eine weitere Schicht, und gegebenenfalls/bevorzugt zumindest eine Lagermetallschicht zwischen dem Stützelement und der zumindest einen Laufschicht, wobei die zumindest eine Laufschicht aus zumindest einer ersten Zinnbasislegierung und die zumindest eine weitere Schicht aus zumindest einer weiteren Zinnbasislegierung gebildet sind, wobei die erste Zinnbasislegierung und die weitere Zinnbasislegierung zumindest ein Element aus einer Gruppe umfassend Cu, Ni, Ag, Sb, As, Pb, Bi, Te, Tl und/oder nichtmetallische Partikel enthalten, und die zumindest eine erste und die zumindest eine weitere Zinnbasislegierung Beta-Zinnkörner enthalten.

Die Verwendung von Zinnbasislegierungen als so genannte Lauf- oder Gleitschichten in Gleitlagern für die Motorenindustrie ist schon seit langem bekannt. Beispielsweise sei hierzu auf die GB 566 360 A (Sn-Cu-Legierung mit 75 % bis 99,75 % Sn), die DE 82 06 353 U1 (Weißmetall mit maximal 2 Gew.-% Cu und gegebenenfalls geringen Mengen an As, Ni, und Cd.), die DE 197 28 777 C2 (3 Gew.-% bis 20 Gew.-% Kupfer, Rest Zinn), die DE 199 63 385 C1 (Zinnmatrix mit eingelagerten Sn-Cu Partikel aus 39 Gew.-% bis 55 Gew.-% Cu und Rest Sn),die AT 509 112 A1 und die AT 509 111 A1(Zinnbasislegierung mit bis zu 20 Gew.-% Sb, bis zu 10 Gew.-% Cu und bis in Summe 1,5 Gew.-% Pb und Bi, wobei der Summenanteil an Sb und Cu zwischen 2 Gew.-% und 22 Gew.-% beträgt und die Beta-Zinnkörner eine bestimmte Orientierung oder eine bestimmte Korngröße aufweisen) verwiesen.

Im Stand der Technik sind weiter Zinn oder Zinnlegierungen zur Ausbildung eines sogenannten Zinn-Flash beschrieben. Wie beispielsweise die US 6,000,853 A beschreibt, handelt es sich dabei um eine weniger als 1 μm dicke Schutzschicht auf Gleitlagern, die als Oberflächenschutz gegen Oxidation dient und das optische Aussehen der Gleitfläche verbessert. Der Zinn-Flash wird bei der ersten Inbetriebnahme der Gleitlager von der Welle abgetragen, da er zu weich ist. Eine gewisse Verbesserung des Einlaufverhaltens kann durch den Zinnflash erreicht werden, die eigentliche Einlaufschicht ist jedoch die unter dem Zinnflash liegende Gleitschicht, die die geometrische Anpassung der Reibpartner ermöglicht. Zum Unterschied dazu beschreibt die US 6,000,853 A eine ca. 5 μm dicke Funktionsschicht aus reinem Zinn. Diese Funktionsschicht ist auf einer Bleibasislegierung angeordnet. Dadurch bildet sich an der Kontaktfläche eine eutektische Legierung mit entsprechend stark herabgesetzter Temperaturbeständigkeit. Außerdem kann durch den unmittelbaren Kontakt mit einem Bleiwerkstoff eine Interdiffusion von Blei auftreten.

Die DE100 54 461 C2 beschreibt ein Mehrschichtgleitlager mit einer Deckschicht aus einer Zinn-Basislegierung mit verstärkenden Metallen und/oder anorganischen Teilchen, wobei der Gehalt in einem auf die Dicke bezogenen mittleren Bereich relativ hoch und im Oberflächenbereich Null oder kleiner als in der Mitte ist.

In der Regel erfüllen die aus den Zinnbasislegierungen gebildeten Mehrschichtgleitlager die an sie gestellten Aufgaben zufriedenstellend. Für einige spezielle Anwendungen, wie z.B. schnelllaufende Motoren (ca. 1000 U/min bis 3000 U/min), beispielsweise LKW-Motoren, Gasmotoren, Motoren für Bergbau- und Schiffsanwendungen, sowie für mittelschnelllaufende Motoren (ca. 300 U/min bis 1000 U/min), beispielsweise in Schiffs- und Kraftwerksanwendungen, also in der Regel hochbelastete Radialgleitlager, werden aufgrund der hohen Belastungen auf der radial inneren Oberfläche verstärkte Oberflächenbeschichtungen eingesetzt. Dabei bildet sich in der Regel der Oberflächenzustand vor der Beschichtung an der beschichteten Oberfläche ab. Feinbohr- oder Räumriefen verursachen dabei eine Welligkeit der Oberfläche in radialer bzw. axialer Richtung. Diese Welligkeit führt, insbesondere bei einer verstärkten Oberflächenbeschichtung zu einer bei Betriebsbeginn extrem hohen lokalen Belastung. Durch die Unebenheiten der Oberfläche wird die Welle vorwiegend von den Riefenspitzen, vermittelt durch einen nur äußerst dünnen unter Umständen sogar abreißenden Ölfilm gelagert. Gleichzeitig führt die hohe Verschleißfestigkeit verstärkter Beschichtungen dazu, dass die an sich wünschenswerte Anpassung der Lageroberfläche an die Welle (Anpassungsverschleiß) zu langsam oder nur in ungenügendem Maße eintritt. In dieser verlängerten Phase des Anpassungsverschleißes kann durch die Überlastung der Oberflächenbeschichtung auf Grund des noch nicht vollständigen Traganteils ein irreversibler Schaden in Form von Ermüdung, Rissen und/oder Ausbrüchen eintreten.

Der vorliegenden Erfindung liegt die Aufgabe zugrunde, lokale Überbelastungen der Laufschicht während der Einlaufphase eines hochbelasteten Radialgleitlagers zu reduzieren bzw. zu vermeiden.

Ein hochbelastetes Radialgleitlager ist insbesondere ein Radialgleitlager, das in schnell- und mittelschnelllaufenden Motoren (entsprechend voranstehenden Ausführungen) eingesetzt wird.

Die Aufgabe der Erfindung wird bei dem eingangs genannten Gleitlagerelement dadurch gelöst, dass die zumindest eine erste Zinnbasislegierung einen Festigkeitsindex FI von mindestens 5 und höchstens 25 und die zumindest eine weitere Zinnbasislegierung einen Festigkeitsindex FI von mindestens 0,3 und höchstens 3 aufweisen, der Festigkeitsindex der Laufschicht mindestens dem Fünffachen des Festigkeitsindex der zumindest einen, direkt auf der Laufschicht angeordneten weiteren Schicht beträgt, wobei der Festigkeitsindex FI definiert ist durch die Gleichung

$$FI = 100 * \omega C + 50 * \omega S + 2 * \sqrt[2]{(100 * \omega B)},$$

worin C für zumindest eines der Elemente Cu, Ni, Ag, S für Sb und/oder As und/oder nichtmetallische Partikel, B für zumindest eines der Elemente Pb, Bi, Te, Tl, und $\omega$ für die Summenanteile der jeweils den Buchstaben C, S und B zugeordneten Bestandteile der Zinnbasislegierungen stehen.

Von Vorteil ist dabei, dass die geringer feste Deckschicht aus der zumindest einen weiteren Zinnbasislegierung während des Einlaufs rasch verschleißt. Dabei werden allerdings abgeriebene Partikel nicht bzw. nicht zur Gänze mit dem Schmieröl ausgetragen, sondern es erfolgt aufgrund der höheren Duktilität dieser weichen Schicht eine Einebnung der Welligkeit der Oberfläche der Laufschicht. Die darunter angeordnete Laufschicht mit dem höheren Festigkeitsindex wirkt dabei stützend für die zumindest eine weitere Schicht. Darüber hinaus hat dieser Schichtaufbau den Vorteil, dass nach dem Einlaufen des Gleitlagerelementes in den durch die mechanische Bearbeitung entstandenen Tälern der Oberfläche der zumindest einen Laufschicht die zumindest eine weitere Schicht mit dem geringeren Festigkeitsindex zumindest teilweise erhalten bleibt. Diese wirkt damit im normalen Betrieb des Gleitlagerelementes an dessen tribologischen Verhalten mit, insbesondere in Hinblick auf die Einbettfähigkeit von Fremdpartikel bzw. das Schmierverhalten des Gleitlagerelementes. Dabei wird durch die Erhebungen der Welligkeit der zumindest einen Laufschicht eine Stützwirkung für die zumindest eine weitere Zinnbasislegierung in den Tälern erreicht. Darüber hinaus verbessert die Deckschicht auch großflächig die Anpassung der Lageroberfläche an den Lagerzapfen. Dieser Anpassungsbedarf ergibt sich durch Abweichungen der Oberflächengeometrie von Zapfen, Grundbohrung und Lagerform (z.B. Rundheit, Konizität, Fluchtung der Körper zueinander). Diese Abweichungen nehmen naturgemäß mit der Größe der Bauteile zu. Der aus dem Stand der Technik bekannte "Zinn-Flash" kann diesen Anforderungen nicht ausreichend gerecht werden, da er sich in der Einlaufphase rasch abreibt.

Gemäß einer Ausführungsvariante des Gleitlagerelementes kann vorgesehen sein, dass die zumindest eine weitere Schicht zumindest auch an einem Gleitlagerelementrücken angeordnet ist. Besonders bevorzugt hüllt die zumindest eine weitere Schicht die restlichen Schichten des Gleitlagerelementes ein. Es ist damit möglich, in einem einzigen Verfahrensschritt sowohl den Gleitlagerelementrücken als auch die radial innere Oberfläche der zumindest einen Laufschicht mit der zumindest einen weiteren Zinnbasislegierung zu versehen, wobei die zumindest eine weitere Zinnbasislegierung auf der radial inneren Oberfläche die voranstehend genannten Effekte bewirkt, auf dem Gleitlagerelementrücken aber gleichzeitig als Korrosionsschutz eingesetzt werden kann. Durch die zeitgleiche Abscheidung auf der Vorder- und der Rückseite des Gleitlagerelementes kann damit eine entsprechende Zeitersparnis in der Herstellung des Gleitlagerelementes erreicht werden. Gleiches trifft auf die Ausführungsvariante zu, bei der die zumindest eine weitere Schicht die weiteren Schichten vollständig einhüllt, sodass also die zumindest eine weitere Schicht auch auf den Stirnflächen in Axialrichtung abgeschieden wird. In diesem Fall kann aber die zumindest eine weitere Schicht auch als Axialgleitfläche wirken.

Nach einer weiteren, bevorzugten Ausführungsvariante des Gleitlagerelementes kann vorgesehen sein, dass die zumindest eine weitere Schicht zumindest im Bereich einer radial inneren Oberfläche eine Schichtdicke aufweist, die ausgewählt ist aus einem Bereich von zumindest $5*10^{-6}$ eines Lagerinnendurchmessers bis $50*10^{-6}$ eines Lagerinnendurchmessers, wobei die Schichtdicke der zumindest einen weiteren Schicht zumindest 1,5 $\mu$m und höchstens 15 $\mu$m beträgt. Es wird also mit dieser Ausführungsvariante bei der Festlegung der Schichtdicke der zumindest einen weiteren Schicht innerhalb der angegebenen absoluten Grenzwerte der Lagerinnendurchmesser und in weiterer Folge damit auch das Lagerspiel berücksichtigt. Im Zusammenspiel mit dem Schichtaufbau aus den zumindest zwei unterschiedlichen Zinnbasislegierungen kann damit das Abreißen des Schmiermittelfilms besser verhindert werden, wodurch Schäden an dem Gleitlagerelement während der Einlaufphase effektiver verhindert werden können.

Nach weiteren Ausführungsvarianten kann vorgesehen werden, dass die Schichtdicke der zumindest einen weiteren Schicht im Bereich der radial inneren Oberfläche größer ist als der doppelte arithmetische Raumittelwert Ra nach DIN EN ISO 4287:2010 dieser Oberfläche und/oder dass die Schichtdicke der zumindest einen weiteren Schicht im Bereich der radial inneren Oberfläche kleiner ist als die doppelte mittlere Rautiefe Rz nach DIN EN ISO 4287:2010 dieser Oberfläche. Vorzugsweise wird die Schichtdicke der zumindest einen weiteren Schicht so gewählt, dass beide Bedingungen gelten. Einerseits kann durch die Berücksichtigung von Ra der negative Einfluss der festeren Laufschicht unter der zumindest einen weiteren Schicht während der Einlaufphase weiter reduziert werden, wobei aber andererseits durch die Berücksichtigung von Rz die zumindest eine weitere Schicht noch eine ausreichende Stützwirkung durch die zumindest eine Laufschicht aufweist.

Die Schichtdicke der zumindest einen weiteren Schicht am Gleitlagerelementrücken kann zwischen 0,1 Mal und 0,5 Mal der Schichtdicke der zumindest einen weiteren Schicht im Bereich der radial inneren Oberfläche betragen. Nachdem sich das Gleitlagerelement im Lagersitz nicht drehen soll und die zumindest eine weitere Schicht am Gleitlagerelementrücken zwischen zwei harten Werkstoffen angeordnet ist, nämlich zwischen der Stützschicht des Gleitlagerelementes und dem Werkstoff der Lageraufnahme, und zudem am Gleitlagerelementrücken nur Mikrobewegungen zwischen der Lageraufnahme und dem Gleitlagerelement zu erwarten sind, wird vorzugsweise die Schichtdicke der zumindest einen weiteren Schicht am Gleitlagerelementrücken reduziert, da die zumindest eine weitere Schicht am Gleitlagerelementrücken nicht abgerieben werden soll. Durch die Reduktion der Schichtdicke kann die Stützwirkung der Stützschicht auf die zumindest eine weitere Schicht besser zur Geltung kommen. Durch die zumindest eine weitere Schicht am Gleitlagerelementrücken kann andererseits auch ein Korrosionsschutz für das Gleitlagerelement erreicht werden.

Nach einer weiteren Ausführungsvariante kann vorgesehen sein, dass die Schichtdicke 0,3 Mal bis 5 Mal, insbesondere 1 Mal bis 2 Mal, so groß ist wie die mittlere Höhe des dominanten Welligkeitsprofils WDc nach dem Messverfahren gemäß VDA 2007 "Geometrische Produktspezifikation, Oberflächenbeschaffenheit, Definitionen und Kenngrößen der dominanten Welligkeit".

Die Zinnbasislegierungen der zumindest einen Laufschicht und der zumindest einen weiteren Schicht enthalten wie an sich bekannt Beta-Zinnkörner. Es ist dabei von Vorteil, wenn die Vorzugsorientierung der Beta-Zinn-Körner in zumindest zwei aneinander anliegenden Schichten der zumindest einen Laufschicht und/oder der zumindest einen weiteren Schicht weitgehend gleich ist, wobei bevorzugt die beiden aneinander anliegenden Schichten eine Laufschicht und eine weitere Schicht sind. Besonders bevorzugt ist dabei, wenn die Röntgenbeugungsintensität der weiteren Schicht mit dem höchsten Orientierungsindex auch die Röntgenbeugungsintensität mit dem höchsten Orientierungsindex der Laufschicht ist oder eine der drei Röntgenbeugungsintensitäten der Laufschicht mit den höchsten Orientierungsindizes ist, oder wenn insbesondere auch die Röntgenbeugungsintensitäten mit dem zweit- und/oder dritthöchsten Orientierungsindex der weiteren Schicht die Röntgenbeugungsintensitäten mit dem zweit- und/oder dritthöchsten Orientierungsindex der Laufschicht ist bzw. sind. Röntgenbeugungsintensitäten mit einem Index von unter 1,5, insbesondere von unter 2, werden dabei als zu wenig ausgerichtet vernachlässigt. Es kann damit die Bindefestigkeit der beiden miteinander verbundenen Schichten verbessert werden, da an der Grenzfläche der beiden aneinander anliegenden Schichten eine Art Verzahnungseffekt beobachtet wurde, indem die Körner der einen Schicht besser in die "Lücken" der anderen Schicht hineinpassen.

Bevorzugt enthält die Zinnbasislegierung der zumindest einen Laufschicht zwischen 0 Gew.-% und 40 Gew.-% Antimon und/oder zwischen 0 Gew.-% und 25 Gew.-% Kupfer, wodurch die zumindest eine Laufschicht einerseits eine gute Einbettfähigkeit für Fremdpartikel aus dem Abrieb und andererseits eine entsprechend hohe Festigkeit aufweist.

Die Zinnbasislegierung der zumindest einen weiteren Schicht kann zwischen 0 Gew.-% und 3 Gew.-% Kupfer und/oder Antimon und zwischen 0,01 und 10 Gew.-% Bismut und/oder Blei enthalten, wodurch die zumindest eine weitere Schicht einfacher verformbar ausgebildet werden kann. Dies wiederum wirkt sich positiv auf den voranstehend genannten Einebnungseffekt der Welligkeit der zumindest einen Laufschicht mit der zumindest einen weiteren Schicht während der Einlaufphase des Gleitlagerelementes aus.

Es kann vorgesehen werden, dass die zumindest eine weitere Schicht nur eine Kornlage an Beta-Zinnkörner aufweist, wodurch die Bindefestigkeit der zumindest einen weiteren Schicht in den Tälern der Welligkeit der Oberfläche der zumindest einen Laufschicht verbessert werden kann.

Nach einer anderen Ausführungsvariante ist vorgesehen, dass die Beta-Zinnkörner in der zumindest einen weiteren Schicht eine mittlere Korngröße zwischen 10 % und 90 % der Schichtdicke der zumindest einen weiteren Schicht aufweisen. Durch die Ausbildung der Beta-Zinnkörner mit einer mittleren Korngröße innerhalb dieses Bereichs kann die Matrix aus den Beta-Zinnkörnern einfacher verformbar ausgebildet werden, sodass die Matrix an sich einen kleinen Festigkeitsindex aufweist. Dadurch ist es möglich, größere Anteile an weiteren Elementen, die an sich festigkeitssteigernd auf die Matrix wirken, zuzulegieren, ohne den Bereich des Festigkeitsindex der zumindest einen weiteren Schicht zu verlassen, und auf diese Weise die tribologischen Eigenschaften der zumindest einen weiteren Schicht über die weiteren Legierungselemente zu verbessern.

Bevorzugt ist die zumindest eine weitere Schicht galvanisch abgeschieden, da damit die Ausbildung eines gerichteten Kornwachstums besser steuerbar ist. Darüber hinaus kann damit auch die voranstehend genannte zumindest zweiseitige, vorzugsweise vollständig einhüllende, Abscheidung der zumindest einen weiteren Schicht einfacher realisiert werden.

Es kann weiter vorgesehen sein, dass die zumindest eine weitere Schicht direkt auf der zumindest einen Laufschicht angeordnet ist, wodurch die voranstehend genannten Effekte hinsichtlich des Traganteils des Gleitlagerelementes und der Verkürzung der Einlaufzeit und der verbesserten Tragfähigkeit des Gleitlagerelementes während der Einlaufzeit weiter verbessert werden können.

Zum besseren Verständnis der Erfindung wird diese anhand der nachfolgenden Figuren näher erläutert.

Es zeigen jeweils in vereinfachter, schematischer Darstellung:

Fig. 1     ein Radialgleitlagerelement in Form einer Halbschale in Seitenansicht;

Fig. 2     eine Rauhigkeitskurve (links) mit einer Traganteilskurve (rechts);

Fig. 3    einen Ausschnitt aus dem Gleitlagerelement nach Fig. 1;

Fig. 4    einen Ausschnitt aus einer Ausführungsvariante eines Gleitlagerelementes;

Fig. 5    der Verlauf des Quotienten der Schichtdicke der weiteren Schicht zu Rz in Abhängigkeit von der Tragfähigkeit des Gleitlagerelementes;

Fig. 6    der Verlauf des Quotienten der Schichtdicke der weiteren Schicht zu Ra in Abhängigkeit von der Tragfähigkeit des Gleitlagerelementes;

Fig. 7    der Verlauf des Quotienten der Schichtdicke der weiteren Schicht zu WDc in Abhängigkeit von der Tragfähigkeit des Gleitlagerelementes.

Einführend sei festgehalten, dass in den unterschiedlich beschriebenen Ausführungsformen gleiche Teile mit gleichen Bezugzeichen bzw. gleichen Bauteilbezeichnungen versehen werden, wobei die in der gesamten Beschreibung enthaltenen Offenbarungen sinngemäß auf gleiche Teile mit gleichen Bezugzeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

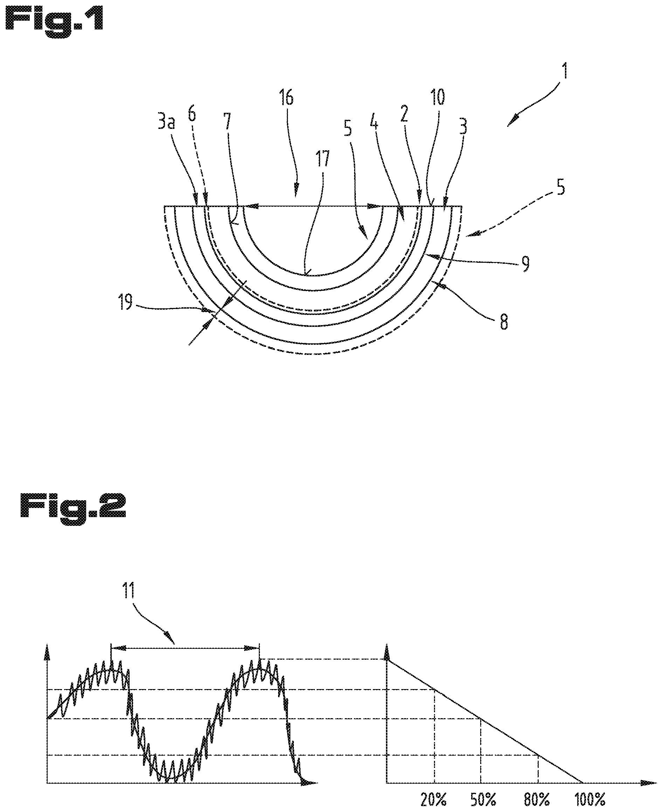

In Fig. 1 ist ein metallisches Gleitlagerelement 1, insbesondere ein Radialgleitlagerelement, in Seitenansicht dargestellt. Dieses weist einen Gleitlagerelementkörper 2 auf. Der Gleitlagerelementkörper 2 umfasst in dieser Reihenfolge, eine Stützschicht 3, zumindest eine darauf angeordnete Lagermetallschicht 3a, zumindest eine darauf angeordnete Laufschicht 4 und zumindest eine auf der zumindest einen Laufschicht 4 angeordnete weitere Schicht 5 (Deckschicht) bzw. besteht aus der Stützschicht 3, der zumindest einen Laufschicht 4 und der damit verbundenen zumindest einen weiteren Schicht 5. Die zumindest eine weitere Schicht 5 ist bevorzugt direkt auf der zumindest einen Laufschicht 4 angeordnet und mit dieser verbunden.

Mit dem Begriff "zumindest einer" in Bezug auf die Laufschicht 4 und die weitere Schicht 5 soll zum Ausdruck gebracht werden, dass es möglich ist, dass die Laufschicht 4 aus mehreren Einzellaufschichten unterschiedlicher Zusammensetzung und/oder die weitere Schicht 5 aus mehreren Einzellaufschichten unterschiedlicher Zusammensetzung aufgebaut sein kann oder können bzw. aus diesen mehreren Einzelschichten bestehen kann oder können. Es ist aber auch möglich, dass die Konzentration zumindest einzelner Legierungselemente in der Laufschicht 4 und/oder der weiteren Schicht 5 kontinuierlich in Richtung auf die radial innere Oberfläche des Gleitlagerelementes 1 abnimmt oder zunimmt. In all diesen Fällen ist die Zusammensetzung der Laufschicht 4 und der weiteren Schicht 5 entsprechend den nachfolgenden Angaben zur allgemeinen Zusammensetzung der beiden Schichten entsprechend Tabelle 1 so zu verstehen, dass diese die durchschnittlichen Mengenanteile der einzelnen Legierungselemente in der gesamten Laufschicht 4 und der gesamten weiteren Schicht 5 wiedergibt.

Es ist zudem möglich, dass die Laufschicht 4 direkt auf einem Stützelement, das insbesondere die Stützschicht 3 bildet, angeordnet ist, sodass also auf eine Lagermetallschicht 3a verzichtet wird. Diese Direktbeschichtung wird beispielsweise bei Pleuelaugen angewandt. Die zumindest eine weitere Schicht 5 ist auch bei dieser Ausführungsvariante auf der Laufschicht 4 angeordnet. Gegebenenfalls kann bei dieser Ausführungsvariante zwischen dem Stützelement und der zumindest einen Laufschicht 4 eine Bindeschicht und/oder eine Diffusionssperrschicht angeordnet werden.

Wie in Fig. 1 strichliert angedeutet zu ersehen ist, kann der Gleitlagerelementkörper 2 auch zusätzliche Schichten aufweisen, beispielsweise zumindest eine Zwischenschicht 6, die zwischen der zumindest einen weiteren Schicht 4 und der zumindest einen Laufschicht 3 angeordnet ist. Die zumindest eine Zwischenschicht 6 kann beispielsweise eine Diffusionssperrschicht und/oder zumindest eine Bindeschicht sein.

Es ist weiter möglich, dass die zumindest eine weitere Schicht 5 nicht nur an einer radial inneren Oberfläche 7 der zumindest einen Laufschicht 4 angeordnet ist, sondern dass die zumindest eine weitere Schicht 5 auch an einem Gleitlagerelementrücken 8 angeordnet ist, wie dies ebenfalls strichliert in Fig. 1 angedeutet ist. Gemäß einer weiteren Ausführungsvariante dazu kann vorgesehen sein, dass die zumindest eine weitere Schicht 5 auf zumindest annähernd allen bzw. auf allen Oberflächen des Gleitlagerelementkörpers 2 angeordnet ist, also auch an axialen Stirnflächen 9 und/oder an radialen Stirnflächen 10.

Das Gleitlagerelement 1 bildet zusammen mit zumindest einem weiteren Gleitlagerelement - je nach konstruktivem Aufbau kann auch mehr als ein weiteres Gleitlagerelement vorhanden sein - ein Gleitlager aus, wie dies an sich bekannt ist. Dabei ist bevorzugt das im Betrieb des Gleitlagers höher belastete Gleitlagerelement durch das Gleitlagerelement 1 nach der Erfindung gebildet. Es besteht aber auch die Möglichkeit, dass zumindest eines der zumindest einen weiteren Gleitlagerelemente durch das Gleitlagerelement 1 nach der Erfindung gebildet wird.

Das Gleitlagerelement 1 nach Fig. 1 ist in Form einer Halbschale ausgebildet. Es ist weiter möglich, dass das Gleitlagerelement 1 als Gleitlagerbuchse ausgebildet ist. In diesem Fall ist das Gleitlagerelement 1 gleichzeitig das Gleitlager. Weiter besteht die Möglichkeit einer anderen Teilung, beispielsweise einer Drittelteilung, sodass das Gleitlagerelement 1 mit zwei weiteren Gleitlagerelementen zu einem Gleitlager kombiniert wird, wobei zumindest eines der beiden weiteren Gleitlagerelemente ebenfalls durch das Gleitlagerelement 1 gebildet sein kann. In diesem Fall deckt das Gleitlagerelement nicht eine Winkelbereich von 180 ° sondern einen Winkelbereich von 120° ab.

Insbesondere ist das Gleitlagerelement 1 zur Verwendung in der Motorenindustrie bzw. in Motoren entsprechend den voranstehenden Ausführungen vorgesehen.

Die Stützschicht 3 besteht vorzugsweise aus einem Stahl, kann aber auch aus anderen geeigneten Werkstoffen, wie z.B. einer Bronze, bestehen.

Die Lagermetallschicht 3a besteht bevorzugt aus einer Kupferbasislegierung oder einer Aluminiumbasislegierung, wie sie für diese Zwecke aus dem Stand der Technik bekannt sind. Beispielsweise kann die Lagermetallschicht 3a aus einer Legierung auf Kupferbasis nach DIN ISO 4383, wie z.B. CuSn10, CuAl10Fe5Ni5, CuZn31Si, CuPb24Sn2, CuSn8Bi10, CuSn4Zn, bestehen.

Die zumindest eine Zwischenschicht 6 besteht aus einem für diese Zwecke aus dem Stand der Technik bekannten Werkstoff.

Die zumindest eine Laufschicht 4 besteht aus zumindest einer ersten Zinnbasislegierung. Die zumindest eine weitere Schicht 5 besteht aus zumindest einer weiteren Zinnbasislegierung. Sowohl die zumindest eine erste Zinnbasislegierung als auch die zumindest eine weitere Zinnbasislegierung bestehen aus einer Matrix aus Beta-Zinnkörnern und einem oder mehreren Element(en) aus einer Gruppe umfassend oder bestehend aus Cu, Ni, Ag, Sb, Pb, Bi, Te, Tl. Weiter können alternativ zu diesem zumindest einem Element oder zusätzlich dazu nichtmetallische Partikel in der zumindest einen ersten Zinnbasislegierung und/oder der zumindest einen weiteren Zinnbasislegierung enthalten sein. Die nichtmetallischen Partikel sind insbesondere anorganische Partikel, beispielsweise $Al_2O_3$, $Si_3N_4$, $TiO_2$, SiC, etc.. Vorzugsweise weisen die anorganischen Partikel eine maximale Partikelgröße zwischen 0,05 $\mu m$ und 5 $\mu m$, insbesondere zwischen 0,1 $\mu m$ und 2 $\mu m$, auf.

Die maximale Partikelgröße wird mittels Laserbeugung entsprechend der Norm ISO 13320:2009 ermittelt.

In Fig. 2 ist ein Rauheitsprofil (linker Teil der Figur) und eine Traganteilskurve (rechter Teil der Figur) dargestellt. Es soll damit das der Erfindung zugrunde liegende Problem näher erläutert werden.

Wie voranstehend ausgeführt, werden bei einem hochbelasteten Radialgleitlager verstärkte Oberflächenbeschichtungen verwendet. Die üblichen Endbearbeitungen, wie Feinbohren oder Räumen, nach der bzw. den Beschichtungen des Substrats verursachen aufgrund von Riefenbildung eine Welligkeit der Oberfläche in radialer bzw. axialer Richtung. Diese Mikrowelligkeit führt bei einer verstärkten Oberflächenbeschichtung zu einer bei Betriebsbeginn extrem hohen lokalen Belastung. Durch die Unebenheiten der Oberfläche wird die Welle vorwiegend von den Riefenspitzen, vermittelt durch einen nur äußerst dünnen unter Umständen sogar abreißenden Ölfilm gelagert.

Im linken Teil der Fig. 2 ist ein Rauigkeitsprofil dargestellt, wie es sich durch Feinbohren ergibt, wobei der Profilschrieb in axialer Richtung aufgenommen wurde.

Die Wellen ergeben sich durch den Umlauf der Feinbohrspindel, ein Abstand 11 zwischen den Wellenspitzen von z.B. 0,1-0,2 mm ergibt sich durch den Vorschub pro Umdrehung.

Dieser Welligkeit ist die eigentliche, zufällige Rauigkeit überlagert, deren Bandbreite oft nur einen Bruchteil der Profilhöhe - in diesem Fall etwa ein Viertel - ausmacht, wie dies in Fig. 2 durch das "gezackte" Profil der Welligkeit dargestellt ist.

Rechts in Fig. 2 ist die Traganteilskurve (Abbotkurve) zu dem links dargestellten Rauigkeitsprofil abgebildet.

Durch die geringe plastische Verformung und den Verscheiß der obersten Rauigkeitsspitzen stellt sich in diesem Beispiel zu Beginn des Einlaufs des Gleitlagerelementes ein Traganteil von nur etwa 20% ein.

Der Schmierstoff überträgt einen Teil der Kräfte auch in tieferliegende Profilbereiche wobei insbesondere bei Verwendung dünnflüssiger Schmieröle dieser Anteil gering ist.

Es ist also mit einer etwa 2 bis 5 Mal höheren lokalen Belastung an der Oberfläche zu rechnen. Durch die hervorragende Verschleißfestigkeit der verstärkten Beschichtung wird die Einlaufphase, die Zeit bis etwa 80 % des Profils (und bei Berücksichtigung des Schmierstoffes somit etwa 100% der Oberfläche) zur Unterstützung der Welle beitragen, stark verzögert.

Die ca. 2 bis 5 Mal überhöhte lokale Belastung kann auch die Ermüdungsfestigkeit verstärkter Schichten übertreffen und so zu einer frühzeitigen Schädigung führen.

Nicht nur die kleinräumigen Abweichungen der Oberfläche im Abstand von ca. 0,1 mm können den lokalen Traganteil reduzieren, sondern auch Formabweichungen ähnlicher Höhe im Abstand von Millimetern (etwa an Kanten) oder Zentimetern (in Wanddickenschwankungen der Lauffläche) können den Traganteil ungünstig beeinflussen.

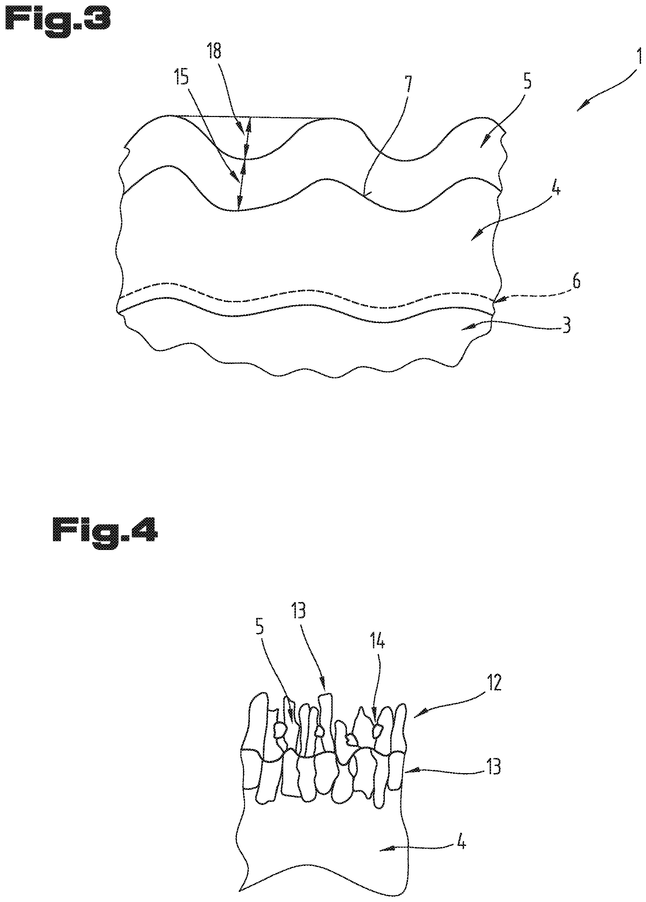

Um diese Probleme von hochbelasteten Gleitlagerelementen besser beherrschen zu können weist das Gleitlagerelement 1 nach der Erfindung eine Kombination aus der zumindest einen Laufschicht 4 und der zumindest einen weiteren Schicht 5 auf, die bevorzugt direkt auf der zumindest einen Laufschicht 4 angeordnet ist. Es ist dazu in Fig. 3 ein Ausschnitt aus dem Gleitlagerelement 1 nach Fig. 1 dargestellt. Wie aus dieser Figur ersichtlich ist, bildet die zumindest eine weitere Schicht 5 die Welligkeit der Oberfläche 7 der zumindest einen weiteren Laufschicht 4 nach.

Dabei besteht die zumindest eine Laufschicht 4 aus der zumindest einen ersten Zinnbasislegierung, wobei die zumindest eine erste Zinnbasislegierung einen Festigkeitsindex FI von mindestens 5 und höchstens 25, insbesondere mindestens 10 und höchstens 25, aufweist. Die zumindest eine weitere Schicht 5 besteht aus der zumindest einen weiteren Zinnbasislegierung, wobei diese Zinnbasislegierung aber nur einen Festigkeitsindex FI von mindestens 0,3 und höchstens 3, insbesondere mindestens 0,3 und höchstens 1,5, aufweist.

Durch diese Kombination der beiden Schichten wird erreicht, dass ein Verschleiß der zumindest einen weiteren Schicht 5 von wenigen Mikrometern zu einer deutlichen Verbesserung des Traganteils und damit zu einer deutlichen Verringerung lokaler Überlastungen führt.

Der Festigkeitsindex FI ist definiert durch die Gleichung

$$\mathrm{FI} \ = \ 100 * \omega\mathrm{C} \ + \ 50 * \omega\mathrm{S} \ + \ 2 * \sqrt[2]{(100 * \omega\mathrm{B})} \, ,$$

worin C für zumindest eines der Elemente Cu, Ni, Ag, S für Sb und/oder nichtmetallische Partikel, B für zumindest eines der Elemente Pb, Bi, Te, Tl, und ω für die Summenanteile der jeweils den Buchstaben C, S und B zugeordneten Bestandteile der Zinnbasislegierungen bedeuten.

Unter einem Festigkeitsindex von 0,3 der weiteren Schicht 5 konnte keine wesentliche Verbesserung des tribologischen Verhaltens des Gleitlagerelementes 1 im Vergleich zu solchen mit Reinzinnschichten beobachtet werden. Der Grund dafür liegt wahrscheinlich darin, dass zwar technisches Reinzinn naturgemäß Verunreinigung aufweist. Zinn ist heute üblicherweise in einer Reinheit von >99,95% erhältlich. Einzelverunreinigungen durch Blei, Antimon und Bismut (den drei Hauptverunreinigungselementen) im Bereich von je ca. 0,005 - 0,01 % sind Standard. Bei Anwendung galvanischer Herstellprozesse werden die Elemente Antimon und Bismut in aller Regel weiter reduziert, da sie sich aus der Anode nur geringfügig in den Elektrolyten lösen Damit weist das abgeschiedene Zinn, das beispielsweise für den sogenannten Zinn-Flash verwendet wird, einen noch geringeren Gehalt an "Verunreinigungen" auf. Ein Festigkeitsindex von mindestens 0,3 kann also mit Reinzinn mit den üblichen Verunreinigungen nicht erreicht werden.

Zinnlegierungen ohne Dotierung mit Blei, Antimon oder Bismut sind nicht in ausreichendem Maße vor der allotropen Umwandlung bei kühler Lagerung geschützt. Die Zeit bis zum Beginn der Umwandlung und die Umwandlungsgeschwindigkeit können bereits durch einen Summenanteil von Blei, Bismut und Antimon von 0,04% ausreichend verzögert werden.

Bei einem Festigkeitsindex der weiteren Schicht 5 von mehr als 3 ist die Anpassungsfähigkeit der weiteren Schicht 5 durch die dann schon erhöhte Festigkeit reduziert.

Es ist weiter möglich, dass zwischen der zumindest einen Laufschicht 4 und der zumindest einen weiteren Schicht 5 ein Übergangsbereich ausgebildet ist. Aus diesem Grund werden in der vorliegenden Beschreibung die Ausdrücke "zumindest eine Laufschicht 4" bzw. "zumindest eine weitere Schicht 5" verwendet, da damit die Laufschicht 4 und/oder die weitere Schicht 5 als mehrschichtig aufgebaut betrachtet werden können.

Der Übergangsbereich zwischen der Laufschicht 4 und der weiteren Schicht 5 kann einen Festigkeitsindex FI von mindestens 3 und höchstens 5 aufweisen.

Es ist damit auch möglich, das Schichtsystem aus Laufschicht 4 und weitere Schicht 5 als Gradientenschicht hinsichtlich des Verlaufs des Festigkeitsindex in radialer Richtung auszubilden.

Bevorzugt weist der Übergangsbereich eine Schichtdicke auf, die nicht größer ist als die Schichtdicke 15 der weiteren Schicht 5. Die voranstehend angegebenen Werte für die Schichtdicke 15 der weiteren Schicht 5 treffen daher auch auf den Übergangsbereich zu.

Bevorzugt enthält auch die Laufschicht 4 einen Summenanteil von Blei, Bismut und Antimon von zumindest 0,04%.

Bei einem Festigkeitsindex FI der Laufschicht 4 von weniger als 5 weist diese eine Verschleißfestigkeit auf, die nicht dem gewünschten Eigenschaftsprofil des Gleitlagerelementes 1 entspricht. Andererseits nimmt deren Anpassungs- und Schmutzeinbettfähigkeit (auch im eingelaufenen Zustand) bei einem Festigkeitsindex von mehr als 25 deutlich ab.

Die zumindest eine weitere Schicht 5 wird vorzugsweise galvanisch abgeschieden. Auch die zumindest eine Laufschicht 4 wird bevorzugt galvanisch abgeschieden. Da die galvanische Abscheidung an sich bekannt ist, sei dazu auf den einschlägigen Stand der Technik verwiesen, beispielsweise auf die von der Anmelderin stammenden AT 509 111 B1 oder AT 509 867 B1, die im Umfang der Bedingungen der galvanischen Abscheidung der Zinnbasislegierung(en) zu gegenständlicher Beschreibung gehört.

Bevorzugt erfolgt nach der Abscheidung der zumindest eine weiteren Schicht 5 keine Endbearbeitung des Gleitlagerelementes 1 durch beispielsweise Feinbohren, bzw. ist diese Endbearbeitung nicht mehr nötig.

Falls die zumindest eine weitere Schicht 5 auch am Gleitlagerelementrücken 8 bzw. an den anderen Oberflächen des Gleitlagerelementes 1 abgeschieden werden soll, insbesondere in Form eines dünnen, optisch ansprechenden und vor Rostbildung schützenden Zinn-Flashes, kann dies mit der Abscheidung der zumindest einen weiteren Schicht 5 auf der radial inneren Seite des Gleitlagerelementes 1 kombiniert werden. Die Schichtdicke kann dabei am Gleitlagerelementrücken 8 reduziert werden, indem radial innen und radial außen die Stromstärke und/oder Beschichtungszeit entsprechend unterschiedlich gewählt wird.

Die nichtmetallischen Partikel können dem jeweiligen galvanischen Bad als solche zugegeben und mit dem Zinn mitabgeschieden werden.

Die jeweiligen Festigkeitsindices der zumindest einen Laufschicht 4 und der zumindest einen weiteren Schicht 5 werden über die Zusammensetzungen der jeweiligen Schichten eingestellt. Generell können diese Schichten die in der folgenden Tabelle 1 angegebenen Anteile an den einzelnen Bestandteilen aufweisen, wobei den Rest auf 100 Gew.-% jeweils das Zinn bildet. Sämtliche Zahlenangaben zu Mengenanteilen in der Tabelle 1, sowie generell in der gesamten Beschreibung (sofern nicht ausdrücklich etwas anderes beschrieben ist), sind in Gew.-% zu verstehen.

Tabelle 1: Mengenanteile der Zinnbasislegierungen

| | Laufschicht 4 | bevorzugter Bereich Laufschicht 4 | Schicht 5 | bevorzugter Bereich Schicht 5 |
|---|---|---|---|---|
| Cu | 0-25 | 7-13 oder 2-5 (insbesondere wenn Sb im angegebenen Anteil enthalten ist) | 0-3 | < 1 |
| Ni | 0-25 | 0 (Verunreinigungen durch Diffusion bis 1) | 0-3 | 0 (Verunreinigungen durch Diffusion bis 0,1) |
| Ag | 0-25 | 0-10 | 0-3 | 0 |
| Sb | 0-40 | 1,5-5 oder 6-13 (insbesondere wenn Cu im angegebenen Anteil enthalten ist) | 0-6 | < 1 |
| As | 0-10 | 0-0,8 | 0-6 | 0-0,8 |
| Pb | In Summe | 0-0,05 (max. 0,2) | In Summe | 0-0,05 (max. 0,2) |
| Bi | | 0-0,5 | | 0-0,5 |
| Te | 0-10 | 0 | 0-10 | 0 |
| Tl | | 0 | | 0 |
| nichtmetallische Partikel | 0-10 | 0 | 0-6 | 0 |

Diese Angaben zur Zusammensetzung sind dabei so zu verstehen, dass die Zinnbasislegierungen der Laufschicht 4 und der weiteren Schicht 5 jedenfalls zumindest eines dieser Legierungselemente in Tabelle 1 enthalten, da anderenfalls die gewünschten Festigkeitsindices dieser Schichten nicht erreicht werden. Es sind also Reinzinn für die Laufschicht 4 und Reinzinn für die weitere Schicht 5 ausgeschlossen.

Nach bevorzugten Ausführungsvarianten des Gleitlagerelementes 1 kann vorgesehen sein, dass die Zinnbasislegierung der zumindest einen Laufschicht 4 zwischen 2 Gew.-% und 12 Gew.-% Antimon und/oder zwischen 2 Gew.-% und 12 Gew.-% Kupfer enthält, und/oder dass die Zinnbasislegierung der zumindest einen weiteren Schicht 5 zwischen 0 Gew.-% und 0,5 Gew.-% Kupfer oder zwischen 0 Gew.-% und 0,5 Gew.-% Antimon oder zwischen 0 Gew.-% und 0,5 Gew.-% Kupfer und Antimon, und zwischen 0,01 und 10 Gew.-% Bismut oder zwischen 0,01 und 2 Gew.-% Blei oder zwischen 0,01 und 10 Gew.-% Bismut und Blei enthält.

Nach einer weiteren bevorzugten Ausführungsvarianten des Gleitlagerelementes 1 kann vorgesehen sein, dass die Zinnbasislegierung der zumindest einen Laufschicht 4 und/oder der zumindest einen weiteren Schicht 5 eine Summenanteil an den in Tabelle 1 genannten Legierungselementen, insbesondere den Elementen Zinn, Antimon und Bismut, von mindestens 0,04 Gew.-%, insbesondere mindestens 0,3 Gew.-%, enthält bzw. enthalten, wobei die obere Grenze des Anteils an diesen Elementen in dieser bzw. diesen Schichten durch die voranstehenden Angaben definiert ist.

In den folgenden Tabellen sind einige Vergleichsbeispiele sowie Ausführungen von Gleitlagerelementen 1 nach der Erfindung wiedergegeben.

Es wurden verschiedene Varianten der weiteren Schicht 5 auf Gleitlagerhalbschalen (Breite 25 mm, Durchmesser 80 mm) aufgetragen und einer dynamischen Gleitlagerprüfung unterzogen. Die verwendeten Gleitlagerschalen wiesen eine ungünstige Oberflächenbeschaffenheit auf (Ra = 0,7 µm, Rq = 0,8 µm, Rz = 2,8 µm, Rt = 3 µm).

Es wurden je zwei Prüfungen durchgeführt, eine mit Prüfung ohne Schiefstellung der Lauffläche (Variante 1), die zweite Prüfung mit Schiefstellung der Lauffläche um 0,5 µm/mm (Variante 2). Diese zweite Prüfung übt eine extreme Belastung auf eine Kante aus, wie sie bei nicht ideal gefluchteten Bohrungen oder z.B. geknickter Pleuelstange auftreten. Die erste Prüfung wurde nach Verschleiß und mikroskopischem Befund bewertet, die zweite Prüfung durch visuelle und mikroskopische Beurteilung. Die Einzelbewertungen wurden je Versuch zu einer Gesamtbewertungszahl 0 - 5 zusammengefasst (0= sehr schlecht, 5=sehr gut)

Zur besseren Vergleichbarkeit wurde der Schichtaufbau des Gleitlagerelementes 1 inklusive der Laufschicht 4 konstant gehalten und nur die weitere Schicht 5 variert.

Die Dicke der Beschichtung wurde, soweit nicht anders angegeben, mit 20 µm ebenfalls konstant gehalten und umfasst die Dicke der Laufschicht 4 und bei den Beispielen nach der Erfindung der weiteren Schicht 5.

In der Spalte Zusammensetzung bedeuten die Zahlen nach den Elementen deren prozentualen Massenanteil (z.B. SnTe1 bedeutet Zinn mit 1 Gew.-% Tellur). Die Abkürzung FI steht für Festigkeitsindex. In der linken Spalte stehen in den Tabellen für den Aufbau die Zahl 5 für die weitere Schicht 5 und die Zahl 4 für die Laufschicht 4. In den Ergebnistabellen stehen in der linken Spalte die Zahl 1 für die Variante 1 und die Zahl 2 für die Variante 2. Diese Nomenklatur gilt für Tabellen zu Beispielen in der gesamten Beschreibung.

Vergleichsbeispiel 1

Aufbau

|   | Schichtdicke | Zusammensetzung | FI |
|---|---|---|---|
| 5 | 1 µm | SnPb0,1 sonstige Elemente <0,005% | 0,4 |
| 4 | 19 µm | SnCu2Pb0,5 sonstige Elemente <0,005% | 3,4 |

Ergebnisse

|   | Verschleiß | Visueller und mikroskopischer Befund |   |
|---|---|---|---|
| 1 | 22 µm | Vollständiger Verschleiß, läuft ins Lagermetall | 1 |
| 2 | - | Vollständiger Verschleiß, läuft ins Lagermetall | 1 |

Es zeigte sich, dass die weitere Schicht 5 zu dünn und die Laufschicht 4 zu weich war.

Vergleichsbeispiel 2

Aufbau

|   | Schichtdicke | Zusammensetzung | FI |
|---|---|---|---|
| 5 | 1,5 µm | Sn sonstige Elemente <0,005% | <0,3 |
| 4 | 18,5 µm | SnCu8Pb0,1 sonstige Elemente <0,005% | 8,6 |

Ergebnisse

|   | Verschleiß | Visueller und mikroskopischer Befund |   |
|---|---|---|---|
| 1 | 6 µm | Geringer Verschleiß, starke Dauerbrüche | 3 |
| 2 | - | Vollständiger Verschleiß einseitig, starke Dauerbrüche | 2 |

Es zeigte sich, dass die weitere Schicht 5 zu weich war.

Vergleichsbeispiel 3

Aufbau

|   | Schichtdicke | Zusammensetzung | FI |
|---|---|---|---|
| 5 | 0 $\mu$m |   |   |
| 4 | 20 $\mu$m | SnCu16Sb3Bi0,15 sonstige Elemente <0,005% | 18,3 |

Ergebnisse

|   | Verschleiß | Visueller und mikroskopischer Befund |   |
|---|---|---|---|
| 1 | 4 $\mu$m | Sehr geringer Verschleiß, starke Dauerbrüche | 3 |
| 2 | - | Verreiber | 0 |

Vergleichsbeispiel 4

Aufbau

|   | Schichtdicke | Zusammensetzung | FI |
|---|---|---|---|
| 5 | 2 $\mu$m | SnPb0,2Sb0,1 sonstige Elemente <0,005% | 0,5 |
| 4 | 18 $\mu$m | SnSb6Cu0,5Pb0,25 sonstige Elemente <0,005% | 4,5 |

Ergebnisse

|   | Verschleiß | Visueller und mikroskopischer Befund |   |
|---|---|---|---|
| 1 | 10 $\mu$m | Deutlicher Verschleiß, Dauerbrüche | 3 |
| 2 | - | Vollständiger Verschleiß einseitig, starke Dauerbrüche | 2 |

Bei diesem Schichtaufbau ist die Laufschicht 4 zu weich.

Vergleichsbeispiel 5

Aufbau

|   | Schichtdicke | Zusammensetzung | FI |
|---|---|---|---|
| 5 | 0,5 $\mu$m | SnPb0,2Sb0,1 sonstige Elemente <0,005% | 0,5 |
| 4 | 19,5 $\mu$m | SnSb8Cu0,3Pb0,2 Partikel-$ZrO_2$ d50=0,1$\mu$m 1% sonstige Elemente <0,005% | 5,7 |

Ergebnisse

|   | Verschleiß | Visueller und mikroskopischer Befund |   |
|---|---|---|---|
| 1 | 7 $\mu$m | Deutlicher Verschleiß, Dauerbrüche | 3 |
| 2 | - | Vollständiger Verschleiß einseitig, starke Dauerbrüche | 2 |

Die weitere Schicht 5 ist zu dünn.

Vergleichsbeispiel 6

Aufbau

| | Schichtdicke | Zusammensetzung | FI |
|---|---|---|---|
| 5 | 1 μm | Sn sonstige Elemente <0,005% | <0,3 |
| 4 | 19 μm | SnAg5Cu1 sonstige Elemente <0,005% | 6 |

Ergebnisse

| | Verschleiß | Visueller und mikroskopischer Befund | |
|---|---|---|---|
| 1 | 7 μm | Deutlicher Verschleiß, Dauerbrüche | 3 |
| 2 | - | Vollständiger Verschleiß einseitig, starke Dauerbrüche | 2 |

Die weitere Schicht 5 ist zu dünn und zu weich.

Vergleichsbeispiel 7

Aufbau

| | Schichtdicke | Zusammensetzung | FI |
|---|---|---|---|
| 5 | 1 μm | Sn sonstige Elemente <0,005% | <0,3 |
| 4 | 19 μm | SnNi8Te0,5 sonstige Elemente <0,005% (Sputter) | 9,4 |

Ergebnisse

| | Verschleiß | Visueller und mikroskopischer Befund | |
|---|---|---|---|
| 1 | 8 μm | Deutlicher Verschleiß, Dauerbrüche | 3 |
| 2 | - | Vollständiger Verschleiß einseitig, starke Dauerbrüche | 2 |

Die weitere Schicht 5 ist zu weich.

Vergleichsbeispiel 8

Aufbau

| | Schichtdicke | Zusammensetzung | FI |
|---|---|---|---|
| 5 | 1 μm | SnSb1Cu1 sonstige Elemente <0,005% | 1,5 |
| 4 | 19 μm | SnSb15Cu5 sonstige Elemente <0,005% | 12,5 |

Ergebnisse

|  | Verschleiß | Visueller und mikroskopischer Befund |  |
|---|---|---|---|
| 1 | 4 μm | Sehr geringer Verschleiß, starke Dauerbrüche | 3 |
| 2 | - | Verreiber | 0 |

Die weitere Schicht 5 ist zu dünn.

Vergleichsbeispiel 9 (ähnlich GB 2 375 801 A, Seite 9, Beispiele 3 und 4)

Aufbau

|  | Schichtdicke | Zusammensetzung | FI |
|---|---|---|---|
| 5 | 18 μm | SnCu4Sb0,6 sonstige Elemente <0,005% | 4,3 |
| 4 | 2 μm | SnCu15Sb2 sonstige Elemente <0,005% | 16 |

Ergebnisse

|  | Verschleiß | Visueller und mikroskopischer Befund |  |
|---|---|---|---|
| 1 | 15 μm | Starker Verschleiß, Dauerbrüche | 2 |
| 2 | - | Vollständiger Verschleiß, läuft ins Lagermetall | 1 |

Die weitere Schicht 5 ist zu dick.

Erfindungsgemäßes Beispiel 1

Aufbau

|  | Schichtdicke | Zusammensetzung | FI |
|---|---|---|---|
| 5 | 3 μm | SnPb0,1 sonstige Elemente <0,005% | 0,6 |
| 4 | 17 μm | SnCu8Pb0,1 sonstige Elemente <0,005% | 8,6 |

Ergebnisse

|  | Verschleiß | Visueller und mikroskopischer Befund |  |
|---|---|---|---|
| 1 | 7 μm | Deutlicher Verschleiß, leichte Dauerbrüche | 4 |
| 2 | - | starker Verschleiß einseitig, starke Dauerbrüche | 2 |

Es wurde im Vergleich mit Vergleichsbeispiel 2 eine Verbesserung der Tragfähigkeit des Gleitlagerelementes 1 erreicht.

Erfindungsgemäßes Beispiel 2

Aufbau

|  | Schichtdicke | Zusammensetzung | FI |
|---|---|---|---|
| 5 | 4 μm | SnCu2Sb0,5Bi0,1 | 2,9 |
| 4 | 16 μm | SnCu16Sb3Bi0,15 sonstige Elemente <0,005% | 18,3 |

Ergebnisse

|   | Verschleiß | Visueller und mikroskopischer Befund |   |
|---|---|---|---|
| 1 | 7 μm | Deutlicher Verschleiß, leichte Dauerbrüche | 4 |
| 2 | - | Verschleiß einseitig, Dauerbrüche | 3 |

Auch bei diesem Beispiel zeigt sich im Vergleich mit Vergleichsbeispiel 3 eine Verbesserung der Tragfähigkeit des Gleitlagerelementes 1.

Erfindungsgemäßes Beispiel 3

Aufbau

|   | Schichtdicke | Zusammensetzung | FI |
|---|---|---|---|
| 5 | 2 μm | SnPb0,2Sb0,1 sonstige Elemente <0,005% | 0,5 |
| 4 | 18 μm | SnSb9Cu1Pb0,25 sonstige Elemente <0,005% | 6,5 |

Ergebnisse

|   | Verschleiß | Visueller und mikroskopischer Befund |   |
|---|---|---|---|
| 1 | 7 μm | Deutlicher Verschleiß, Dauerbrüche | 3 |
| 2 | - | Verschleiß einseitig, Dauerbrüche | 3 |

Verglichen mit Vergleichsbeispiel 4 zeigt sich hier eine Verbesserung hinsichtlich beider Prüfungsvarianten.

Erfindungsgemäßes Beispiel 4

Aufbau

|   | Schichtdicke | Zusammensetzung | FI |
|---|---|---|---|
| 5 | 3 μm | SnAg1 sonstige Elemente <0,005% | 1 |
| 4 | 17 μm | SnAg8Cu1 sonstige Elemente <0,005% | 6 |

Ergebnisse

|   | Verschleiß | Visueller und mikroskopischer Befund |   |
|---|---|---|---|
| 1 | 6 μm | Deutlicher Verschleiß, leichte Dauerbrüche | 4 |
| 2 | - | Verschleiß einseitig, Dauerbrüche | 3 |

Verglichen mit Vergleichsbeispiel 6 zeigt sich hier eine Verbesserung hinsichtlich der Belastbarkeit des Gleitlagerelementes 1.

Erfindungsgemäßes Beispiel 5

Aufbau

|   | Schichtdicke | Zusammensetzung | FI |
|---|---|---|---|
| 5 | 3 μm | SnCu1 sonstige Elemente <0,005% | 1 |
| 4 | 17 μm | SnNi8Te0,5 sonstige Elemente <0,005% (Sputter) | 9,4 |

Ergebnisse

|   | Verschleiß | Visueller und mikroskopischer Befund |   |
|---|---|---|---|
| 1 | 8 μm | Deutlicher Verschleiß, leichte Dauerbrüche | 4 |
| 2 | - | Vollständiger Verschleiß einseitig, starke Dauerbrüche | 2 |

Im Vergleich mit Vergleichsbeispiel 7 wurde eine Verbesserung in Hinblick auf die Dauerbrüche erreicht.

Erfindungsgemäßes Beispiel 6

Aufbau

|   | Schichtdicke | Zusammensetzung | FI |
|---|---|---|---|
| 5 | 5 μm | SnSb1Cu1 sonstige Elemente <0,005% | 1,5 |
| 4 | 15 μm | SnSb15Cu5 sonstige Elemente <0,005% | 12,5 |

Ergebnisse

|   | Verschleiß | Visueller und mikroskopischer Befund |   |
|---|---|---|---|
| 1 | 7 μm | Deutlicher Verschleiß, keine Dauerbrüche | 4 |
| 2 | - | Verschleiß einseitig, leichte Dauerbrüche | 4 |

Verglichen mit Vergleichsbeispiel 8 ist zwar der Verschleiß in Richtung normal auf die Gleitfläche größer, allerdings wurde eine Verbesserung bezüglich der Prüfungsvariante 2 erreicht.

Erfindungsgemäßes Beispiel 7

Aufbau

|   | Schichtdicke | Zusammensetzung | FI |
|---|---|---|---|
| 5 | 3 μm | SnCu2Sb0,6 sonstige Elemente <0,005% | 2,3 |
| 4 | 17 μm | SnCu15Sb2 sonstige Elemente <0,005% | 16 |

Ergebnisse

|   | Verschleiß | Visueller und mikroskopischer Befund |   |
|---|---|---|---|
| 1 | 5 μm | Geringer Verschleiß, keine Dauerbrüche | 5 |
| 2 | - | Verschleiß einseitig, leichte Dauerbrüche | 4 |

Im Vergleich zu Vergleichsbeispiel 9 zeigte sich eine Verbesserung sowohl hinsichtlich nicht gekippter als auch hinsichtlich gekippter Lagerung.

Erfindungsgemäßes Beispiel 8

Aufbau

|   | Schichtdicke | Zusammensetzung | FI |
|---|---|---|---|
| 5 | 3 μm | SnCu2Sb0,6Pb0,05 sonstige Elemente <0,005% | 2,7 |
| 4 | 17 μm | SnCu18Sb8Pb1 sonstige Elemente <0,005% | 24 |

Ergebnisse

|   | Verschleiß | Visueller und mikroskopischer Befund |   |
|---|---|---|---|
| 1 | 5 μm | Geringer Verschleiß, keine Dauerbrüche | 5 |
| 2 | - | Verreiber | 0 |

Wie anhand der Ergebnisse ersichtlich ist, ist diese Ausführungsvariante für nicht gekippte Lagerungen sehr gut geeignet.

Erfindungsgemäßes Beispiel 9

Aufbau

|   | Schichtdicke | Zusammensetzung | FI |
|---|---|---|---|
| 5 | 5 μm | SnCu1Sb0,6Pb0,05 sonstige Elemente <0,005% | 1,7 |
| 4 | 15 μm | SnSb26Pb1 sonstige Elemente <0,005% | 15 |

Ergebnisse

|   | Verschleiß | Visueller und mikroskopischer Befund |   |
|---|---|---|---|
| 1 | 8 μm | Deutlicher Verschleiß, leichte Dauerbrüche | 4 |
| 2 | - | Vollständiger Verschleiß einseitig, starke Dauerbrüche | 2 |

Hohes Sb
Die Ergebnisse sind ähnlich zu voranstehendem Beispiel 9, wobei hier jedoch eine Verbesserung in Hinblick auf gekippte Lagerungen erreicht wurde.

Erfindungsgemäßes Beispiel 10

Aufbau

|   | Schichtdicke | Zusammensetzung | FI |
|---|---|---|---|
| 5 | 6 μm | SnCu2Bi0,5 sonstige Elemente <0,005% | 2,4 |
| 4 | 14 μm | SnCu23Bi1 sonstige Elemente <0,005% | 25 |

Ergebnisse

|  | Verschleiß | Visueller und mikroskopischer Befund |  |
|---|---|---|---|
| 1 | 10 μm | Deutlicher Verschleiß, leichte Dauerbrüche | 4 |
| 2 | - | Vollständiger Verschleiß einseitig, starke Dauerbrüche | 2 |

Dieses Gleitlagerelement 1 zeigt eine ähnliche Tragfähigkeit wie Beispiel 10.

Erfindungsgemäßes Beispiel 11

Aufbau

|  | Schichtdicke | Zusammensetzung | FI |
|---|---|---|---|
| 5 | 8 μm | SnCu1Sb0,5 sonstige Elemente <0,005% | 1,25 |
| 4 | 12 μm | SnCu7Sb7Bi0,1Pb0,1 sonstige Elemente <0,005% | 11,4 |

Ergebnisse

|  | Verschleiß | Visueller und mikroskopischer Befund |  |
|---|---|---|---|
| 1 | 10 μm | Deutlicher Verschleiß, leichte Dauerbrüche | 4 |
| 2 | - | Verschleiß einseitig, Dauerbrüche | 3 |

Durch die sehr hohe Dicke der weiteren Schicht 5 relativ zur Laufschicht 4 nahm der Verschleiß in Hinblick auf eine Belastung normal auf die Gleitfläche zu.

Erfindungsgemäßes Beispiel 12

Aufbau

|  | Schichtdicke | Zusammensetzung | FI |
|---|---|---|---|
| 5 | 2,5 μm | SnPb0,01Bi0,02 sonstige Elemente <0,005% | 0,35 |
| 4 | 18 μm | SnCu9Sb5Bi0,2Pb0,1 sonstige Elemente <0,005% | 12,6 |

Ergebnisse

|  | Verschleiß | Visueller und mikroskopischer Befund |  |
|---|---|---|---|
| 1 | 6 μm | Geringer Verschleiß, leichte Dauerbrüche | 5 |
| 2 | - | Verschleiß einseitig, leichte Dauerbrüche | 4 |

Dieser Aufbau nach Beispiel 12 zeigt hinsichtlich beider Prüfungsvarianten gute Ergebnisse, sodass er sowohl in nicht gekippten als auch in gekippten Lagerungen Anwendung finden kann.

Erfindungsgemäßes Beispiel 13

Aufbau

|  | Dicke | Zusammensetzung | Index |
|---|---|---|---|
| 1 | 3 µm | SnBi2 sonstige Elemente <0,005% | 2,8 |
| 2 | 17 µm | SnCu8Bi8 sonstige Elemente <0,005% | 13,7 |

Ergebnisse

|  | Verschleiß | Visueller und mikroskopischer Befund |  |
|---|---|---|---|
| 1 | 5 µm | Geringer Verschleiß, keine Dauerbrüche | 5 |
| 2 | - | Verschleiß einseitig, Dauerbrüche | 3 |

Weiter wurden auch zwei Versuche mit direkt beschichteter Grundbohrung eines Pleuelauges vorgenommen, wobei in beiden Fällen der fertige Bohrungsinnendurchmesser wie bei den Prüflagern war aber mit einer deutlich höheren Schichtdicke von 40 µm.

Bei diesen Versuchen wurden die Beschichtungen direkt auf dem mit einer dünnen, haftvermittelnden Zwischenschicht versehenen Stahl aufgetragen.

Vergleichsbeispiel 10

Aufbau

|  | Schichtdicke | Zusammensetzung | FI |
|---|---|---|---|
| 5 | - | - | - |
| 4 | 40 µm | SnSb15Cu5 sonstige Elemente <0,005% | 12,5 |

Ergebnisse

|  | Verschleiß | Visueller und mikroskopischer Befund |  |
|---|---|---|---|
| 2 | - | Verreiber | 0 |

Erfindungsgemäßes Beispiel 14

Aufbau

|  | Schichtdicke | Zusammensetzung | FI |
|---|---|---|---|
| 5 | 5 µm | SnSb1Cu1 sonstige Elemente <0,005% | 1,5 |
| 4 | 35 µm | SnSb15Cu5 sonstige Elemente <0,005% | 12,5 |

Ergebnisse

|  | Verschleiß | Visueller und mikroskopischer Befund |  |
|---|---|---|---|
| 1 | 10 µm | Deutlicher Verschleiß, Dauerbrüche | 3 |

Vergleichsbeispiel 11

### Aufbau

|   | Schichtdicke | Zusammensetzung | FI |
|---|---|---|---|
| 5 | 1 | Sn sonstige Elemente <0,005% | <0,3 |
| 4 | 39 µm | SnCu15Sb5 sonstige Elemente <0,005% | 17,5 |

### Ergebnisse

|   | Verschleiß | Visueller und mikroskopischer Befund |   |
|---|---|---|---|
| 1 | - | Verreiber | 0 |

Erfindungsgemäßes Beispiel 15

### Aufbau

|   | Schichtdicke | Zusammensetzung | FI |
|---|---|---|---|
| 5 | 10 µm | SnSb2Cu2 sonstige Elemente <0,005% | 3,0 |
| 4 | 30 µm | SnCu15Sb5 sonstige Elemente <0,005% | 17,5 |

### Ergebnisse

|   | Verschleiß | Visueller und mikroskopischer Befund |   |
|---|---|---|---|
| 1 | 15 µm | Deutlicher Verschleiß, leichte Dauerbrüche | 4 |

Wie bereits erwähnt, kann die Laufschicht 4 aus mehreren Teilschichten unterschiedlicher Zusammensetzung zusammengesetzt sein. Es ist dadurch möglich, dass der Festigkeitsindex dieser Teilschichten in Richtung auf den Gleitlagerelementrücken 8 größer wird. Gleiches gilt für die zumindest eine weitere Schicht 5. Zusammensetzungen der einzelnen Teilschichten können entsprechend den in Tabelle 2 wiedergegebenen Beispielen, bzw. generell aus den in Tabelle 1 wiedergegebenen Werten für die Anteile der einzelnen Bestandteile der Zinnbasislegierungen, gewählt werden.
Beispielhaft wird im Folgenden die Herstellung einer Laufschicht 4 und einer weiteren Schicht 5 aus mehreren Teilschichten beschrieben. Hinsichtlich der möglichen Zusätze zu den wiedergegebenen Elektrolyten sei auf die AT 509 112 B1 verwiesen, auf die diesbezüglich ausdrücklich Bezug genommen wird.

Erfindungsgemäßes Beispiel 16

Elektrolyt zur Abscheidung der Laufschicht 4:

Sn....50 g/L (als Zinn(II)tetrafluoroborat)

Sb....7 g/L (als Antimontrifluorid)

Cu...7 g/L (als Kupfertetrafluoroborat)

Badtemperatur 40°C

|   | Stromdichte | Dauer | Dicke | Zusammensetzung | FI |
|---|---|---|---|---|---|
| Teilllage 1 | 1 A/dm$^2$ | 10 min | 4,5 µm | SnSb15Cu15, sonstige <0,005% | 22,5 |

(fortgesetzt)

|  | Stromdichte | Dauer | Dicke | Zusammensetzung | FI |
|---|---|---|---|---|---|
| Teillage 2 | 2 A/dm$^2$ | 5 min | 4,5 $\mu$m | SnSb10Cu10, sonstige <0,005% | 15,0 |
| Teillage 3 | 4 A/dm$^2$ | 3 min | 5 $\mu$m | SnSb6Cu7, sonstige <0,005% | 10,0 |
| Teillage 4 | 6 A/dm$^2$ | 1,5 min | 4,5 $\mu$m | SnSb4Cu5, sonstige <0,005% | 7,0 |

Elektrolyt zur Abscheidung der weiteren Schicht 5
Sn....40 g/L (als Zinn(II)tetrafluoroborat)
Sb....0,5 g/L (als Antimontrifluorid)
Cu...0,2 g/L (als Kupfertetrafluoroborat)

Badtemperatur 25°C

|  | Stromdichte | Dauer | Dicke | Zusammensetzung | FI |
|---|---|---|---|---|---|
| Teilllage 1 | 1 A/dm$^2$ | 3 min | 1,5 $\mu$m | SnSb2Cu0,5, sonstige <0,005% | 1,5 |
| Teillage 2 | 2 A/dm$^2$ | 2 min | 2 $\mu$m | SnSb1Cu0,2 sonstige <0,005% | 0,7 |

Erfindungsgemäßes Beispiel 17

Elektrolyt zur Abscheidung der Laufschicht 4
Sn....50 g/L (als Zinn(II)methansulfonat)
Cu...7 g/L (als Kupfertetrafluoroborat)
Bi....5 g/L (als Bismuthmethansulfonat)

Temperatur 40°C

|  | Stromdichte | Dauer | Dicke | Zusammensetzung | FI |
|---|---|---|---|---|---|
| Teilllage 1 | 1 A/dm$^2$ | 10 min | 4,5 $\mu$m | SnCu10Bi7, sonstige <0,005% | 15,3 |
| Teillage 2 | 2 A/dm$^2$ | 5 min | 4,5 $\mu$m | SnCu8Bi5, sonstige <0,005% | 12,5 |
| Teillage 3 | 4 A/dm$^2$ | 3 min | 5 $\mu$m | SnCu6Bi4, sonstige <0,005% | 10,0 |

Elektrolyt zur Abscheidung der weiteren Schicht 5
Sn....20 g/L (als Zinn(II)methansulfonat)
Bi....1 g/L (als Bismuthmethansulfonat)
Cu...0,5 g/L (als Kupfertetrafluoroborat)

Badtemperatur 40°C

|  | Stromdichte | Dauer | Dicke | Zusammensetzung | FI |
|---|---|---|---|---|---|
| Teilllage 1 | 1 A/dm$^2$ | 3 min | 1,5 $\mu$m | SnBi1,5Cu0,4 sonstige <0,005% | 2,8 |
| Teillage 2 | 2 A/dm$^2$ | 2 min | 2 $\mu$m | SnBi0,5Cu0,2 sonstige <0,005% | 1,6 |

Im Folgenden werden weitere Ausführungsvarianten des Gleitlagerelementes 1 beschrieben.
Wie aus Fig. 4 ersichtlich ist, kann die weitere Schicht 5 aus nur einer Kornlage 12 an Beta-Zinnkörnern 13 bestehen. Dabei können intermetallische Phasen 14 der oder mit den anderen Bestandteilen der Zinnbasislegierung der weiteren Schicht 5 bzw. die nichtmetallischen Partikel zwischen diesen Beta-Zinnkörnern 13 an deren Korngrenzen eingelagert sein. Wie aus Fig. 4 ersichtlich ist, ergibt sich aufgrund der unterschiedlichen Korngröße der Beta-Zinnkörner 13 der Laufschicht 4 an der Grenzfläche zu der weiteren Schicht 5 eine unebene Laufschichtoberfläche, wobei die Beta-Zinnkörner 13 der weiteren Schicht 5 direkt auf die Beta-Zinnkörner 13 der Laufschicht 4 aufgewachsen sind. Es kann damit eine Art Verzahnungseffekt erzielt werden, der eine höhere Bindefestigkeit der weiteren Schicht 5 auf der Laufschicht 4 bewirkt.

Vorzugsweise können die Beta-Zinnkörner 13 in der zumindest einen weiteren Schicht 5 aus voranstehend genannten Gründen eine mittlere Korngröße zwischen 10 % und 90 % einer Schichtdicke 15 (Fig. 3) der zumindest einen weiteren Schicht 5 aufweisen.

Die mittlere Korngröße wird mittels Laserbeugung wie voranstehend beschrieben bestimmt.

Es ist weiter bevorzugt, wenn die Vorzugsorientierung der Beta-Zinn-Körner 13 in zumindest zwei aneinander anliegenden Schichten der zumindest einen Laufschicht 4 und/oder der zumindest einen weiteren Schicht 5 gleich ist. Insbesondere weisen die Beta-Zinnkörner 13 der Laufschicht 4 und der darauf angeordneten und mit dieser verbundenen weiteren Schicht 5 die gleiche Vorzugsorientierung auf. Besonders bevorzugt ist dabei, wenn die Röntgenbeugungsintensität der weiteren Schicht 5 mit dem höchsten Orientierungsindex auch die Röntgenbeugungsintensität mit dem höchsten Orientierungsindex der Laufschicht 4 oder eine der drei Röntgenbeugungsintensitäten der Laufschicht 4 mit den höchsten Orientierungsindizes ist, oder wenn insbesondere auch die Röntgenbeugungsintensitäten mit dem zweit- und/oder dritthöchsten Orientierungsindex der weiteren Schicht 5 die Röntgenbeugungsintensitäten mit dem zweit- und/oder dritthöchsten Orientierungsindex der Laufschicht 4 ist bzw. sind. Röntgenbeugungsintensitäten mit einem Index von unter 1,5, insbesondere von unter 2, werden dabei als zu wenig ausgerichtet vernachlässigt.

Vorzugsweise sind die Beta-Zinn-Körner 13 nach {220} und/oder {321} (Millerindizes) orientiert.

Zur quantitativen Beschreibung der Vorzugsorientierung wird der Orientierungsindex M{hkl} entsprechend nachfolgender Formel verwendet:

$$M\{hkl\} = \frac{I\{hkl\}\sum I^0\{hkl\}}{I^0\{hkl\}\sum I\{hkl\}}$$

wobei I{hkl} die XRD Intensitäten (Röntgenbeugungsintensitäten) für die {hkl} Ebenen der Gleitschicht und $I^0$\{hkl\} die XRD Intensitäten der völlig unorientierten Zinn-Pulverprobe (ICDD PDF 00-004-0673) darstellen.

Die Summe der Beugungsintensitäten $\sum I\{hkl\}$ bzw. $\sum I^0\{hkl\}$ muss über denselben Bereich erfolgen, beispielsweise alle Intensitäten der Reflexe von {200} bis {431} umfassen, was bei Verwendung von CuKa-Strahlung allen Reflexen mit einem Beugungswinkel 2θ zwischen 30° und 90° entspricht.

In der folgenden Tabelle sind die Röntgenbeugungsintensitäten (Zeilen 3 bis 5) sowie die zugehörigen Orientierungsindizes (Zeilen 6 bis 8) einer SnCu10Sb5 Laufschicht 4 mit einem Anteil an weiteren Legierungselementen von weniger als 0,005 Gew.-% und einem Festigkeitsindex FI von 12,5 (Abkürzung QZ2), einer SnCu10Sb5 Laufschicht 4 mit einem Anteil an weiteren Legierungselementen von weniger als 0,005 Gew.-% und einem Festigkeitsindex FI von 12,5 mit einer darauf angeordneten SnCu1Bi0,02 Legierung als weitere Schicht 5, die einen Anteil an weiteren Legierungselementen von weniger als 0,005 Gew.-% und einen Festigkeitsindex FI von 1,3 aufwies (Abkürzung QZ4) und einer SnCu6Pb1 Laufschicht entsprechend dem Stand der Technik (Abkürzung Ref. 1) wiedergegeben. Die Abkürzung Sn-Ref. steht für das völlig unorientierte Zinnpulver (ICDD PDF 00-004-0673).

Tabelle: Röntgenbeugungsintensitäten und Orientierungsindizes

| HKL | 200 | 101 | 220 | 211 | 301 | 112 | 400 | 321 | 420 | 411 | 312 | 431 | Summe |
|---|---|---|---|---|---|---|---|---|---|---|---|---|---|
| Sn-Ref | 100 | 90 | 34 | 74 | 17 | 23 | 13 | 20 | 15 | 14 | 20 | 13 | 433 |
| QZ2 | 100 | 43,5 | 63,5 | 55,3 | 12,4 | 9,4 | 9,3 | 20,2 | 13,9 | 9,4 | 10,2 | 7,6 | 354,7 |
| QZ4 | 18,5 | 13,4 | 100 | 79,1 | 8,9 | 3,2 | 3,7 | 35 | 16,1 | 9 | 7,4 | 12 | 306,3 |
| Ref 1 | 100 | 60 | 32,2 | 64 | 2,2 | 11 | 9,5 | 21 | 10,3 | 11 | 12,7 | 5,8 | 339,2 |
| I-QZ2 | 1,22 | 0,59 | **2,28** | 0,91 | 0,89 | 0,50 | 0,87 | 1,23 | 1,13 | 0,82 | 0,62 | 0,71 | |
| I-QZ4 | 0,26 | 0,21 | **4,16** | 1,51 | 0,74 | 0,20 | 0,40 | **2,47** | 1,52 | 0,91 | 0,52 | 1,30 | |
| Ref 1 | 1,28 | 0,85 | 1,21 | 1,10 | 0,17 | 0,61 | 0,93 | 1,34 | 0,88 | 0,96 | 0,81 | 0,57 | |

Für die im Folgenden wiedergegebenen Testergebnisse wird die Orientierung von QZ02 mit Ausrichtung a, die Orientierung von QZ04 mit Ausrichtung b und die Orientierung von Ref. 1 mit Ausrichtung c bezeichnet.

Erfindungsgemäßes Beispiel 18

Aufbau

|   | Dicke | Zusammensetzung | Index |
|---|-------|-----------------|-------|
| 4 | 3 $\mu$m | SnCu1Bi0,02 <0,005% (Ausrichtung b) | 2,8 |
| 5 | 17 $\mu$m | SnCu10Bi5 sonstige Elemente <0,005% (Ausrichtung a) | 13,7 |

Ergebnisse

|   | Verschleiß | Visueller und mikroskopischer Befund |   |
|---|-----------|--------------------------------------|---|
| 1 | 5 $\mu$m | Geringer Verschleiß, keine Dauerbrüche | 5 |
| 2 | - | Verschleiß einseitig, leichte Dauerbrüche | 4 |

Vergleichsbeispiel

Aufbau

|   | Dicke | Zusammensetzung | Index |
|---|-------|-----------------|-------|
| 4 | 3 $\mu$m | SnCu1Bi0,02 <0,005% (Ausrichtung c) | 2,8 |
| 5 | 17 $\mu$m | SnCu10Bi5 sonstige Elemente <0,005% (Ausrichtung a) | 13,7 |

Ergebnisse

|   | Verschleiß | Visueller und mikroskopischer Befund |   |
|---|-----------|--------------------------------------|---|
| 1 | 7 $\mu$m | Deutlicher Verschleiß, leichte Dauerbrüche | 4 |
| 2 | - | Verschleiß einseitig, Dauerbrüche | 3 |

Dabei können die Beta-Zinnkörner 13, wie in Fig. 4 dargestellt, einen länglichen Habitus aufweisen und die Beta-Zinnkörner 13 mit ihrer Längsachse in Richtung normal auf die radial innere Oberfläche 17 (Fig. 1) des Gleitlagerelementes 1 orientiert sein. Insbesondere ist dabei von Vorteil, wenn diese länglichen Beta-Zinnkörner 13 einen zumindest annähernd quadratischen Querschnitt (in Richtung parallel zur Laufoberfläche der weiteren Schicht 5 betrachtet) aufweisen, da dadurch das Flächenausmaß der Korngrenzen reduziert werden kann. Es kann damit die Tragfähigkeit des Gleitlagerelementes 1 verbessert werden.

Aus den gleichen Gründen kann es aber auch von Vorteil sein, wenn die Beta-Zinnkörner 13 eine zumindest annähernd würfelförmige Gestalt aufweisen.

Es wurde im Zuge von Tests an unterschiedlichen weiteren Schichten 5 festgestellt, dass bei einer Korngröße der Beta-Zinnkörner 13 von weniger als 0,2 $\mu$m die sehr hohe innere Spannungen in der weiteren Schicht 5 auftreten. Bei einer Korngröße von mehr als 10 $\mu$m entsteht eine Oberfläche, die das gleichmäßige Halten des Schmieröls und damit die bevorzugte Ausbildung des Schmierspaltes verhindert.

Gemäß einer weiteren Ausführungsvariante des Gleitlagerelementes 1 kann vorgesehen sein, dass die mittlere Korngröße, insbesondere die Korngröße, der Beta-Zinnkörner 13 in der zumindest einen weiteren Schicht 4 größer ist, als die mittlere Korngröße, insbesondere die Korngröße, der Beta-Zinnkörner 13 in der Laufschicht 4. Dies kann beispielsweise durch Änderung der Abscheideparameter während der galvanischen Abscheidung erreicht werden, indem beispielsweise die Badtemperatur erhöht und/oder die Abscheidegeschwindigkeit und/oder die Zinnkonzentration im galvanischen Bad reduziert werden. Auch eine nachträgliche Temperaturbehandlung des Gleitlagerelementes 1 kann für diesen Zweck vorgenommen werden.

Vorzugsweise sind die Beta-Zinnkörner 13 der zumindest einen weiteren Schicht 5 direkt auf den Beta-Zinnkörnern 13 der Laufschicht 5 aufgewachsen.

Weiter ist bevorzugt, wenn die zumindest eine weitere Schicht 5 zumindest im Bereich der radial inneren Oberfläche 7 (Fig. 3) der Laufschicht 4 eine Schichtdicke 15 (Fig. 3) aufweist, die ausgewählt ist aus einem Bereich von zumindest $5*10^{-6}$ eines Lagerinnendurchmessers 16 (Fig. 1) bis $50*10^{-6}$ eines Lagerinnendurchmessers 16 (Fig. 1), wobei die Schichtdicke 15 der zumindest einen weiteren Schicht 5 zumindest 1,5 $\mu$m und höchstens 15 $\mu$m, bevorzugt zumindest 2 $\mu$m und höchstens 10 $\mu$m, insbesondere zumindest 2,5 $\mu$m und höchstens 7,5 $\mu$m, oder zumindest 2 $\mu$m und höchstens 6 $\mu$m, beträgt.

Die radial innere weitere Schicht 5 kann eine Schichtdicke 15 aufweisen, die zwischen 10 % und 50 %, insbesondere zwischen 15 % und 30 %, der aus der Schichtdicke der Laufschicht 4 und der weiteren Schicht 5 gebildeten Gesamtschichtdicke beträgt.

Es ist weiter bevorzugt, wenn die Schichtdicke der Laufschicht 4 größer ist als die Schichtdicke der weiteren Schicht 5, insbesondere größer als die dreifache Schichtdicke der weiteren Schicht 5.

Der Lagerinnendurchmesser 16 ist der Durchmesser des Gleitlagerelementes 1 an dessen radial innerersten Oberfläche, wie dies aus Fig. 1 ersichtlich ist. Die Welligkeit der Oberfläche wird dabei durch Messung auf halber Höhe der Wellen berücksichtigt.

Wie anhand der Testergebnisse zu den voranstehend wiedergegebenen erfindungsgemäßen Beispielen ersichtlich ist, ist bei einer Schichtdicke von weniger als 1,5 $\mu$m der voranstehend beschriebe Effekt der zumindest einen weiteren Schicht 5 relativ schwach ausgeprägt, sodass der Traganteil des Gleitlagerelementes 1 nicht im gewünschten Ausmaß erhöht werden kann. Damit können also lokale Überbelastungen der Gleitfläche gegebenenfalls nur unzureichend vermieden werden. Andererseits ist bei einer Schichtdicke 15 der weiteren Schicht 5 von mehr als 15 $\mu$m diese weitere Schicht 5 so dick, dass die Einlaufphase wieder verlängert wird, da mehr Zeit für den teilweisen Abrieb der weiteren Schicht 5 benötigt wird. Zudem kann bei einer Schichtdicke 15 von mehr als 15 $\mu$m die darunter liegende höherfeste Laufschicht 4 der zumindest einen weiteren Schicht 5 nur mehr ungenügend Unterstützung bieten.

Zur besseren Berücksichtigung der Oberflächentopographie der zumindest einen Laufschicht 4 kann vorgesehen sein, dass die Schichtdicke 15 der zumindest einen weiteren Schicht 5 im Bereich einer radial inneren Oberfläche 17 (Fig. 1) größer ist als der doppelte arithmetische Raumittelwert Ra DIN EN ISO 4287:2010 dieser Oberfläche 17 und/oder dass die Schichtdicke 15 der zumindest einen weiteren Schicht 5 im Bereich der radial inneren Oberfläche 17 kleiner ist als die doppelte mittlere Rautiefe Rz DIN EN ISO 4287:2010 dieser Oberfläche 17.

Nach einer anderen Ausführungsvariante kann vorgesehen sein, dass die Schichtdicke 15 (Fig. 3) der zumindest einen weiteren Schicht 5 0,3 Mal bis 5 Mal, insbesondere 1 Mal bis 2 Mal, so groß ist wie eine mittlere Höhe 18 des dominanten Welligkeitsprofils WDc der Oberfläche 17 (Fig. 1) dieser Schicht 5, gemessen normal auf die Bearbeitungsrichtung entsprechend voranstehender VDA 2007..

Um das Zusammenspiel der Oberflächenrauigkeit mit der Dicke der zumindest einen weiteren Schicht 5 zu untersuchen wurden Versuche wie zuvor beschrieben (Variante 1 ohne Schiefstellung) durchgeführt. Die Lagerschalen wiesen Rauigkeiten im Bereich von Ra 0,3 - 0,7 $\mu$m und Rz 2 - 5 auf. Zudem konnte bei zwei Drittel der Lagerschalen eine dominante Welligkeit entdeckt werden mit WDc 0,5 - 2,5 $\mu$m.

Die Lagerschalen wurden entsprechend dem erfindungsgemäßen Beispiel 11 beschichtet, wobei die Schichtdicke 15 der zumindest einen weiteren Schicht 5 zwischen 0,1 und 12 $\mu$m variiert wurde.

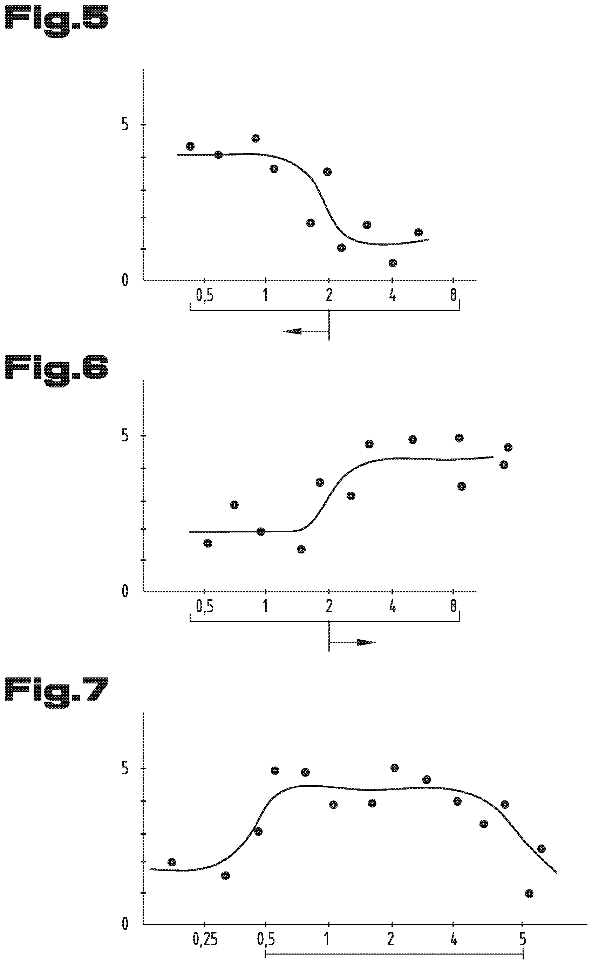

Die Fig. 5 bis 7 zeigen das Ergebnis der Prüfungen in Abhängigkeit des Verhältnisses der Schichtdicke 15 der zumindest einen weiteren Schicht 5 aus SnCu1Sb0,5 zu dem jeweiligen Rauigkeitsparameter. Auf den Ordinaten sind dabei die Prüfergebnisse entsprechend voranstehender Variante 1 aufgetragen. Auf den Abszissen ist das Verhältnis der Schichtdicke 15 der weiteren Schicht 5 zu Rz (Fig. 5) bzw. Ra (Fig. 6) bzw. Wdc (Fig. 7) aufgetragen. Die Laufschicht 4 bestand für diese Tests aus SnCu7Sb7BiPb.

Es ist aus diesen Fig. 5 bis 7 deutlich ersichtlich, dass es von Vorteil ist, wenn die Schichtdicke 15 kleiner ist als zweimal Rz und/oder größer ist als zweimal Ra und/oder im Bereich zwischen WDc = 0, 5 bis 5 liegt.

Weiter kann vorgesehen sein, dass eine Schichtdicke 19 (Fig. 1) der zumindest einen weiteren Schicht 5 am Gleitlagerelementrücken 8 zwischen 0,1 Mal und 0,5 Mal der Schichtdicke 15 der zumindest einen weiteren Schicht 5 im Bereich der radial inneren Oberfläche 17 beträgt.

Bei Rücken-Schichtdicken von 5 $\mu$m oder mehr erhöht sich das Risiko von Verschiebungen des Materials im Betrieb, was zur Deformation der Bohrung und Verschlechterung der Rückenanlage führen kann.

Der Bereich von 0,1 - 0,5 Mal der Schichtdicke 15 der radial inneren weiteren Schicht 5 bietet bei einem galvanischen Herstellungsprozess den Vorteil, dass durch moderate (z.B. um einen Faktor 2 - 3) Verkürzung der Beschichtungsdauer am Rücken und/oder Reduktion der Stromdichte eine Schichtdicke 19 eingestellt werden kann, die einen ausreichenden Korrosionsschutz bietet, aber noch nicht das Risiko von Materialverschiebungen erhöht.

Eine zu starke Reduktion der Stromdichte kann beispielsweise zu einer starken Veränderung der Zusammensetzung der Abscheidung und damit reduzierten Korrosionsschutzwirkung führen.

Die Ausführungsbeispiele zeigen mögliche Ausführungsvarianten des Gleitlagerelementes 1, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus Gleitlagerelementes 1 dieses bzw. dessen Bestandteile teilweise unmaßstäblich und/oder vergrößert und/oder verkleinert dargestellt wurden.

**Bezugszeichenaufstellung**

| | |
|---|---|
| 1 | Gleitlagerelement |
| 2 | Gleitlagerelementkörper |
| 3 | Stützschicht |
| 3a | Lagermetallschicht |
| 4 | Laufschicht |
| 5 | Schicht |
| 6 | Zwischenschicht |
| 7 | Oberfläche |
| 8 | Gleitlagerelementrücken |
| 9 | Stirnfläche |
| 10 | Stirnfläche |
| 11 | Abstand |
| 12 | Kornlage |
| 13 | Beta-Zinnkorn |
| 14 | Phase |
| 15 | Schichtdicke |
| 16 | Lagerinnendurchmesser |
| 17 | Oberfläche |
| 18 | Höhe |
| 19 | Schichtdicke |

**Patentansprüche**

1. Gleitlagerelement (1), insbesondere Radialgleitlagerelement, umfassend in dieser Reihenfolge ein Stützelement, das insbesondere eine Stützschicht (3) bildet, zumindest eine Laufschicht (4), zumindest eine weitere Schicht (5), und gegebenenfalls zumindest eine Lagermetallschicht (3a) zwischen dem Stützelement und der zumindest einen Laufschicht (4), wobei die zumindest eine Laufschicht (4) aus zumindest einer ersten Zinnbasislegierung und die zumindest eine weitere Schicht (5) aus zumindest einer weiteren Zinnbasislegierung gebildet sind, wobei die erste Zinnbasislegierung und die weitere Zinnbasislegierung zumindest ein Element aus einer Gruppe umfassend Cu, Ni, Ag, Sb, As, Pb, Bi, Te, Tl und/oder nichtmetallische Partikel enthalten, und die zumindest eine erste und die zumindest eine weitere Zinnbasislegierung Beta-Zinnkörner (13) enthalten, **dadurch gekennzeichnet, dass** die zumindest eine erste Zinnbasislegierung einen Festigkeitsindex FI von mindestens 5 und höchstens 25 und die zumindest eine weitere Zinnbasislegierung einen Festigkeitsindex FI von mindestens 0,3 und höchstens 3 aufweisen, der Festigkeitsindex der Laufschicht (4) mindestens dem Fünffachen des Festigkeitsindex der zumindest einen, direkt auf der Laufschicht (4) angeordneten weiteren Schicht (5) beträgt, wobei der Festigkeitsindex FI definiert ist durch die Gleichung

$$FI = 100 * \omega C + 50 * \omega S + 2 * \sqrt[2]{(100 * \omega B)},$$

worin C für zumindest eines der Elemente Cu, Ni, Ag, S für Sb und/oder nichtmetallische Partikel, B für zumindest eines der Elemente Pb, Bi, Te, Tl, und $\omega$ für die Summenanteile der jeweils den Buchstaben C, S und B zugeordneten Bestandteile der Zinnbasislegierungen stehen.

2. Gleitlagerelement (1) nach Anspruch 1, **dadurch gekennzeichnet, dass** die zumindest eine weitere Schicht (5) zumindest auch an einem Gleitlagerelementrücken (8) angeordnet ist.

3. Gleitlagerelement (1) nach Anspruch 1 oder 2, **dadurch gekennzeichnet, dass** die zumindest eine weitere Schicht (5) zumindest im Bereich einer radial inneren Oberfläche (17) eine Schichtdicke (15) aufweist, die ausgewählt ist aus einem Bereich von zumindest $5*10^{-6}$ eines Lagerinnendurchmessers (16) bis $50*10^{-6}$ eines Lagerinnendurchmessers (16), wobei die Schichtdicke (15) der zumindest einen weiteren Schicht (5) zumindest 1,5 $\mu$m und höchstens 15 $\mu$m beträgt.

4. Gleitlagerelement (1) nach Anspruch 3, **dadurch gekennzeichnet, dass** die Schichtdicke (17) der zumindest einen weiteren Schicht (5) im Bereich der radial inneren Oberfläche (17) größer ist als der doppelte arithmetische Raumittelwert Ra DIN EN ISO 4287:2010 dieser Oberfläche (17).

5. Gleitlagerelement (1) nach Anspruch 3 oder 4, **dadurch gekennzeichnet, dass** die Schichtdicke (15) der zumindest einen weiteren Schicht (5) im Bereich der radial inneren Oberfläche (17) kleiner ist als die doppelte mittlere Rautiefe Rz DIN EN ISO 4287:2010 dieser Oberfläche (17).

6. Gleitlagerelement (1) nach einem der Ansprüche 3 bis 5, **dadurch gekennzeichnet, dass** eine Schichtdicke (19) der zumindest einen weiteren Schicht (5) am Gleitlagerelementrücken (8) zwischen 0,1 Mal und 0,5 Mal der Schichtdicke (15) der zumindest einen weiteren Schicht (5) im Bereich der radial inneren Oberfläche (17) beträgt.

7. Gleitlagerelement (1) nach einem der Ansprüche 3 bis 6, **dadurch gekennzeichnet, dass** die Schichtdicke (15) der zumindest einen weiteren Schicht (5) 0,3 Mal bis 5 Mal, insbesondere 1 Mal bis 2 Mal, so groß ist wie die mittlere Höhe (18) des dominanten Welligkeitsprofils WDc nach dem Messverfahren gemäß VDA 2007.

8. Gleitlagerelement (1) nach einem der Ansprüche 3 bis 7, **dadurch gekennzeichnet, dass** die Vorzugsorientierung der Beta-Zinnkörner (13) in zumindest zwei aneinander anliegenden Schichten der zumindest einen Laufschicht (4) und/oder der zumindest einen weiteren Schicht (5) oder in der zumindest einen Laufschicht (4) und der daran anliegenden zumindest einen weiteren Schicht (5) weitgehend gleich ist.

9. Gleitlagerelement (1) nach einem der Ansprüche 1 bis 8, **dadurch gekennzeichnet, dass** die Zinnbasislegierung der zumindest einen Laufschicht (4) zwischen 0 Gew.-% und 40 Gew.-% Antimon und/oder zwischen 0 Gew.-% und 25 Gew.-% Kupfer enthält.

10. Gleitlagerelement (1) nach einem der Ansprüche 1 bis 9, **dadurch gekennzeichnet, dass** die Zinnbasislegierung der zumindest einen weiteren Schicht (5) zwischen 0 Gew.-% und 3 Gew.-% Kupfer und/oder Antimon und zwischen 0,01 und 10 Gew.-% Bismut und/oder Blei enthält.

11. Gleitlagerelement (1) nach einem der Ansprüche 1 bis 10, **dadurch gekennzeichnet, dass** die zumindest eine weitere Schicht (5) nur eine Kornlage an Beta-Zinnkörner (13) aufweist.

12. Gleitlagerelement (1) nach einem der Ansprüche 1 bis 10, **dadurch gekennzeichnet, dass** die Beta-Zinnkörner (13) in der zumindest einen weiteren Schicht (5) eine mittlere Korngröße zwischen 10 % und 90 % der Schichtdicke (15) der zumindest einen weiteren Schicht (5) aufweisen.

13. Gleitlagerelement (1) nach einem der Ansprüche 1 bis 12, **dadurch gekennzeichnet, dass** die zumindest eine weitere Schicht (5) galvanisch abgeschieden ist.

14. Gleitlagerelement (1) nach einem der Ansprüche 1 bis 13, **dadurch gekennzeichnet, dass** die zumindest eine weitere Schicht (5) direkt auf der zumindest einen Laufschicht (4) angeordnet ist.

**Claims**

1. A sliding bearing element (1), in particular a radial sliding bearing element, comprising in this sequence a support element, which in particular forms a support layer (3), at least one running layer (4), at least one additional layer (5), and possible at least one bearing metal layer (3a) between the support element and the at least one running layer (4), wherein the at least one running layer (4) is formed by at least one first tin-based alloy and the at least one additional layer (5) is formed by at least one additional tin-based alloy, wherein the first tin-based alloy and the additional tin-based alloy contain at least one element of a group comprising Cu, Ni, Ag, Sb, As, Pb, Bi, Te, Tl and/or non-metal particles, and the at least one first and the at least one additional tin-based alloy contain beta-tin grains (13), wherein the at least one first tin-based alloy has a strength index FI of at least 5 and at most 25 and the at least one additional tin-based alloy has a strength index FI of at least 0.3 and at most 3, the strength index of the running layer (4) is at least five times the strength index of the at least one additional layer (5) arranged directly on the running layer (4), and the strength index FI is defined by the equation,

$$FI = 100 * \omega C + 50 * \omega S + 2 * \sqrt[2]{(100 * \omega B)},$$

in which C represents at least one of the elements Cu, Ni, Ag; S represents Sb and/or non-metal particles; B represents at least one of the elements Pb, Bi, Te, Tl; and $\omega$ represents the total content of each of the tin-based alloy components assigned to the letters C, S, and B.

2. The sliding bearing element (1) as claimed in claim 1, wherein the at least one additional layer (5) is arranged at least also on a sliding bearing element rear (8).

3. The sliding bearing element (1) as claimed in claim 1 or 2, wherein the at least one additional layer (5) at least in the region of a radial inner surface (17) has a layer thickness (15), which is selected from a range of at least $5*10^{-6}$ of a bearing inner diameter (16) to $50*10^{-6}$ of a bearing inner diameter (16), wherein the layer thickness (15) of the at least one additional layer (5) is at least 1.5 $\mu$m and at most 15 $\mu$m.

4. The sliding bearing element (1) as claimed in claim 3, wherein the layer thickness (17) of the at least one additional layer (5) in the region of the radial inner surface (17) is greater than twice the arithmetic roughness average value Ra DIN EN ISO 4287:2010 of said surface (17).

5. The sliding bearing element (1) as claimed in claim 3 or 4, wherein the layer thickness (15) of the at least one additional layer (5) in the region of the radial inner surface (17) is smaller than twice the average roughness depth Rz DIN EN ISO 4287:2010 of said surface (17).

6. The sliding bearing element (1) as claimed in any of claims 3 to 5, wherein a layer thickness (19) of the at least one additional layer (5) on the sliding bearing element rear (8) is between 0.1 times and 0.5 times the layer thickness (15) of the at least one additional layer (5) in the region of the radial inner surface (17).

7. The sliding bearing element (1) as claimed in any of claims 3 to 6, wherein the layer thickness (15) of the at least one additional layer (5) is 0.3 times to 5 times, in particular 1 times to 2 times, as large as the average height (18) of the dominant waviness profile WDc according to the measurement process of VDA 2007.

8. The sliding bearing element (1) as claimed in any of claims 3 to 7, wherein the preferred orientation of the beta-tin grains (13) in at least two adjoining layers of the at least one running layer (4) and/or the at least one additional layer (5) or in the at least one running layer (4) and the adjoining at least one additional layer (5) is mostly identical.

9. The sliding bearing element (1) as claimed in any of claims 1 to 8, wherein the tin-based alloy of the at least one running layer (4) contains between 0 wt.% and 40 wt.% antimony and/or between 0 wt.% and 25 wt.% copper.

10. The sliding bearing element (1) as claimed in any of claims 1 to 9, wherein the tin-based alloy of the at least on additional layer (5) contains between 0 wt.% and 3 wt.% copper and/or antimony and between 0.01 and 10 wt.% bismuth and/or lead.

11. The sliding bearing element (1) as claimed in any of claims 1 to 10, wherein the at least one further layer (5) has only one grain layer of beta-tin grains (13).

12. The sliding bearing element (1) as claimed in any of claims 1 to 10, wherein the beta-tin grains (13) in the at least one additional layer (5) have an average grain size of between 10 % and 90 % of the layer thickness (15) of the at least one additional layer (5).

13. The sliding bearing element (1) as claimed in any of claims 1 to 12, wherein the at least one additional layer (5) is deposited galvanically.

**14.** The sliding bearing element (1) as claimed in any of claims 1 to 13, wherein the at least one additional layer (5) is arranged directly on the at least one running layer (4).

**Revendications**

**1.** Elément de palier lisse (1), en particulier élément de palier lisse radial, comprenant dans cet ordre un élément de soutènement, qui forme en particulier une couche de soutènement (3), au moins une couche de roulement (4), au moins une couche supplémentaire (5), et éventuellement au moins une couche de métal antifriction (3a) entre l'élément de soutènement et la ou les couches de roulement (4), la ou les couches de roulement (4) étant formées d'au moins un premier alliage à base d'étain, et la ou les couches supplémentaires (5) étant constituées d'au moins un alliage à base d'étain supplémentaire, le premier alliage à base d'étain et l'alliage supplémentaire à base d'étain contenant au moins un élément du groupe comprenant Cu, Ni, Ag, Sb, As, Pb, Bi, Te, Tl et/ou des particules non métalliques, et le ou les premiers alliages à base d'étain et le ou les alliages supplémentaires à base d'étain contenant des grains d'étain bêta (13), **caractérisé en ce que** le ou les premiers alliages à base d'étain présentent un indice de résistance FI d'au moins 5 et d'au plus 25, et le ou les alliages supplémentaires à base d'étain présentent un indice de résistance FI d'au moins 0,3 et d'au plus 3, l'indice de résistance de la couche de roulement (4) étant au moins le quintuple de l'indice de résistance de la ou des couches supplémentaires (5) disposées directement sur la couche de roulement (4), l'indice de résistance FI étant défini par l'équation

$$FI = 100 * \omega C + 50 * \omega S + 2 * \sqrt[2]{(100 * \omega B)},$$

dans laquelle C représente au moins l'un des éléments Cu, Ni, Ag, S représente Sb et/ou des particules non métalliques, B représente au moins l'un des éléments Pb, Bi, Te, Tl, et $\omega$ représente la proportion de chacun des constituants, associés aux lettres C, S et B, des alliages à base d'étain.

**2.** Elément de palier lisse (1) selon la revendication 1, **caractérisé en ce que** la ou les couches supplémentaires (5) sont disposées au moins aussi contre un envers (8) d'élément de palier lisse.

**3.** Elément de palier lisse (1) selon la revendication 1 ou 2, **caractérisé en ce que** la ou les couches supplémentaires (5) présentent, au moins dans la zone d'une surface radialement intérieure (17), une épaisseur de couche (15) qui est choisie dans la plage comprise entre 5*10$^{-6}$ d'un diamètre intérieur de palier (16) et 50*10$^{-6}$ d'un diamètre intérieur de palier (16), l'épaisseur de couche (15) de la ou des couches supplémentaires (5) étant d'au moins 1,5 $\mu$m et d'au plus 15 $\mu$m.

**4.** Elément de palier lisse (1) selon la revendication 3, **caractérisé en ce que** l'épaisseur de couche (17) de la ou des couches supplémentaires (5) est, dans la zone de la surface radialement intérieure (17), plus grande que le double de la rugosité moyenne arithmétique Ra DIN EN ISO 4287:2010 de cette surface (17).

**5.** Elément de palier lisse (1) selon la revendication 3 ou 4, **caractérisé en ce que** l'épaisseur de couche (15) de la ou des couches supplémentaire (5) est, dans la zone de la surface radialement intérieure (17), inférieure au double de la profondeur totale moyenne de rugosité Rz DIN EN ISO 4287:2010 de cette surface (17).

**6.** Elément de palier lisse (1) selon l'une des revendications 3 à 5, **caractérisé en ce qu'**une épaisseur de couche (19) de la ou des couches supplémentaires (5) est, sur l'envers (8) de l'élément de palier lisse, compris entre 0,1 fois et 0,5 fois l'épaisseur de couche (15) de la ou des couches supplémentaires (5) dans la zone de la surface radialement intérieure (17).

**7.** Elément de palier lisse (1) selon l'une des revendications 3 à 6, **caractérisé en ce que** l'épaisseur de couche (15) de la ou des couches supplémentaires (5) est 0,3 fois à 5 fois, en particulier 1 fois à 2 fois plus grande que la hauteur moyenne (18) du profil d'ondulation dominante WDc, déterminée par la méthode de mesure selon VDA 2007.

**8.** Elément de palier lisse (1) selon l'une des revendications 3 à 7, **caractérisé en ce que** l'orientation préférentielle des grains d'étain bêta (13) est largement identique dans au moins deux couches s'appuyant l'une contre l'autre de la ou des couches de roulement (4) et/ou de la ou des couches supplémentaire (5) ou dans la ou les couches de roulement (4) et la ou les couches supplémentaire (5) qui s'appuient contre elles.

9. Elément de palier lisse (1) selon l'une des revendications 1 à 8, **caractérisé en ce que** l'alliage à base d'étain de la ou des couches de roulement (4) contient de 0 % en poids à 40 % en poids d'antimoine et de 0 % en poids à 25 % en poids de cuivre.

10. Elément de palier lisse (1) selon l'une des revendications 1 à 9, **caractérisé en ce que** l'alliage à base d'étain de la ou des couches supplémentaires (5) contient de 0 % en poids à 3 % en poids de cuivre et/ou d'antimoine et de 0,01 à 10 % en poids de bismuth et/ou de plomb.

11. Elément de palier lisse (1) selon l'une des revendications 1 à 10, **caractérisé en ce que** la ou les couches supplémentaire (5) ne comportent qu'une couche de grains d'étain bêta (13).

12. Elément de palier lisse (1) selon l'une des revendications 1 à 10, **caractérisé en ce que** les grains d'étain bêta (13) de la ou des couches supplémentaires (5) présentent une grosseur de grain comprise entre 10 % et 90 % de l'épaisseur de couche (15) de la ou des couches supplémentaires (5).

13. Elément de palier lisse (1) selon l'une des revendications 1 à 12, **caractérisé en ce que** la ou les couches supplémentaire (5) sont déposées par électrolyse.

14. Elément de palier lisse (1) selon l'une des revendications 1 à 13, **caractérisé en ce que** la ou les couches supplémentaires (5) sont directement disposées sur la ou les couches de roulement (4).

# Fig.1

# Fig.2

## Fig.3

## Fig.4

**Fig.5**

**Fig.6**

**Fig.7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 566360 A
- DE 8206353 U1
- DE 19728777 C2
- DE 19963385 C1
- AT 509112 A1
- AT 509111 A1
- US 6000853 A
- DE 10054461 C2
- AT 509111 B1
- AT 509867 B1
- GB 2375801 A
- AT 509112 B1